# EUROPÄISCHE PATENTSCHRIFT

(11) **EP 4 282 559 B1**
(45) Veröffentlichungstag und Bekanntmachung des Hinweises auf die Patenterteilung: **25.09.2024**
(21) Anmeldenummer: 22175520.0
(22) Anmeldetag: 25.05.2022
(51) Int. Cl.: B22F 3/22, B22F 7/06, B22F 7/08, F23Q 7/00, H05B 3/06

(54) **VERFAHREN ZUM HERSTELLEN EINES HYBRIDBAUTEILS UND ENTSPRECHENDES HYBRIDBAUTEIL**
METHOD FOR MANUFACTURING A HYBRID COMPONENT AND CORRESPONDING HYBRID COMPONENT
PROCÉDÉ DE FABRICATION D'UN COMPOSANT HYBRIDE ET COMPOSANT HYBRIDE CORRESPONDANT

(43) Veröffentlichungstag der Anmeldung: 29.11.2023
(73) Patentinhaber: Schunk Sintermetalltechnik GmbH, 06502 Thale (DE)
(72) Erfinder: WAMSER, Thomas, 35452 Heuchelheim (DE); LANGER, Ingolf, 06484 Quedlinburg (DE); PAULSEN, Jannis, 06502 Thale (DE); BAUMGÄRTNER, Frank, 35460 Staufenberg (DE)
(74) Vertreter: Qip Patentanwälte Dr. Kuehn & Partner mbB

(56) Entgegenhaltungen:
- EP-A1- 3 069 760
- WO-A1-2021/047784
- DE-T2- 3 789 950

## Beschreibung

### GEBIET DER ERFINDUNG

Die vorliegende Erfindung betrifft ein Verfahren zum Herstellen eines Hybridbauteils. Die Erfindung betrifft ferner ein entsprechend herstellbares Hybridbauteil.

### HINTERGRUND DER ERFINDUNG

Für verschiedenste industrielle oder sonstige Anwendungen werden Bauteile eingesetzt, die unter vorgegebenen Randbedingungen bestimmte Funktionalitäten realisieren sollen. Neben strukturellen Eigenschaften müssen dabei auch Materialien für die Bauteile derart gewählt werden, dass sie den Randbedingungen und zu realisierenden Funktionalitäten gerecht werden. Da hierbei in vielen Fällen ein aus einem einzigen Werkstoff bestehendes Bauteil nicht alle Erfordernisse zufriedenstellend erfüllen kann, können Bauteile als sogenannte Hybridbauteile bereitgestellt werden, bei denen verschiedene Bauteilkomponenten aus unterschiedlichen Werkstoffen bestehen.

In der nachfolgenden Beschreibung werden Hybridbauteile überwiegend am

Beispiel einer Elektrode bzw. einer Elektrodendurchführung, wie sie für eine elektrische Katalysatorvorheizung für eine Abgasanlage eines Kraftfahrzeugs eingesetzt werden kann, sowie deren Herstellung beschrieben.

Eine solche Elektrode bzw. Elektrodendurchführung kann dazu vorgesehen sein, eine in der Abgasanlage integrierte Heizeinrichtung mit einer außerhalb der Abgasanlage angeordneten elektrischen Energiequelle zu verbinden, um die Heizeinrichtung mit elektrischer Leistung versorgen zu können. Mithilfe der Elektrode können dabei Leistungen im Kilowattbereich, in manchen Fällen bis zu 10 kW, zu übertragen sein. Die Elektrode muss hierbei im Allgemeinen durch eine Wandung der Abgasanlage hindurchgeführt werden und dabei gegenüber dieser elektrisch isoliert sein. Außerdem muss die Elektrode den in der Abgasanlage vorherrschenden extremen Bedingungen hinsichtlich hoher Temperaturen (oft im Bereich von 700 - 1100°C), mechanischen Belastungen wie insbesondere Vibrationen, chemischen Belastungen insbesondere durch aggressive Gase, etc. standhalten können.

Um alle diese Anforderungen mit einem Hybridbauteil erfüllen zu können, müssen jeweils dessen einzelne Bauteilkomponenten strukturell, funktional und hinsichtlich der darin verwendeten Werkstoffe geeignet konfiguriert sein. Außerdem müssen die einzelnen Bauteilkomponenten untereinander geeignet wechselwirken, insbesondere in geeigneter Weise mechanisch miteinander verbunden sein, um in einem großen Temperaturbetriebsbereich und/oder bei schnell erfolgenden Temperaturänderungen trotz wirkender Kräfte und/oder chemischer Aggressionen zuverlässig ihre Aufgabe erfüllen zu können.

Neben Elektroden bzw. Elektrodendurchführungen ist jedoch eine Vielzahl anderer Hybridbauteile für verschiedenste Anwendungsbereiche einsetzbar. Beispielsweise können Lagerschalen für schnell drehende Elektromotoren mithilfe von Hybridbauteilen ausgebildet werden, um gegebenenfalls innerhalb eines großen Temperaturbetriebsbereichs unterschiedlichen Anforderungen hinsichtlich Festigkeit, Gewicht, Massenträgheit, elektrischen Eigenschaften oder Ähnlichem gerecht zu werden.

Bei der Herstellung von Hybridbauteilen sollte gewährleistet werden, dass die eingesetzten Bauteilkomponenten langfristig und zuverlässig in einer gewünschten Weise und gegebenenfalls innerhalb eines großen Temperaturbereichs miteinander kooperieren. Beispielsweise sollten die Bauteilkomponenten fest bzw. drehfest miteinander verbunden sein und dies vorzugsweise sowohl bei einer Umgebungstemperatur von beispielsweise 20°C als auch bei einer sehr hohen Betriebstemperatur von beispielsweise vielen Hundert Grad Celsius, oft sogar über 1000°C. In vielen Fällen kann eine kraftschlüssige und/oder formschlüssige Verbindung zwischen den Bauteilkomponenten gewünscht sein. Außerdem kann eine elektrische und/oder thermische Isolation zwischen einzelnen Bauteilkomponenten des Hybridbauteils gefordert sein, welche durch zwischengelagerte isolierende Bauteilkomponenten oder Schichten bewirkt werden kann.

Herkömmlich wurden zur Herstellung von Hybridbauteilen meist Techniken wie ein mechanisches Einpressen und/oder ein thermisches Einschrumpfen einer Bauteilkomponente in eine andere Bauteilkomponente eingesetzt. EP3069760 A1, WO2021/047784 A1, offenbaren solche Hybridbauteile, die durch pulvermetallurgische Techniken hergestellt wurden.

Beim Einpressen wird eine erste Bauteilkomponente mit einer Ausnehmung bereitgestellt und eine zweite Bauteilkomponente in diese Ausnehmung eingepresst. Eine Passung zwischen den beiden Bauteilkomponenten sollte hierbei sehr genau sein. Beispielsweise wird oft eine Passung von H7 / s6 eingesetzt. Dementsprechend müssen die beiden Bauteilkomponenten vor dem Einpressen im Regelfall sehr genau bearbeitet werden, um beispielsweise eine Außengeometrie der zweiten Bauteilkomponente und eine Innengeometrie der Ausnehmung in der ersten Bauteilkomponente genau aneinander anpassen zu können und Toleranzen dabei gering halten zu können. Außerdem ist häufig eine nachträgliche Bearbeitung des zusammengefügten Hybridbauteils nach dem Einpressen der zweiten Bauteilkomponente notwendig. Da die beiden Bauteilkomponenten in der Regel präzise vorbearbeitet und nach dem Einpressen nachbearbeitet werden müssen, ergibt sich oft insgesamt ein hoher Herstellungsaufwand für das Hybridbauteil. Außerdem eignet sich das Einpressen oft nur für metallische Bauteilkomponenten, kann jedoch bei elektrisch isolierenden Bauteilkomponenten beispielsweise aus Keramikmaterial schwierig bis unmöglich sein.

Bei der alternativen Herstellungstechnik des thermischen Fügens durch Einschrumpfens kann die erste Bauteilkomponente mitsamt ihrer Ausnehmung zunächst erhitzt werden. Dabei dehnt sie sich aus, sodass Abmessungen der Ausnehmung temporär vergrößert sind. In die Ausnehmung kann dann die zweite Bauteilkomponente eingebracht werden. Nach einem Abkühlen der ersten Bauteilkomponente kann sich ein starker Kraftschluss bzw. in manchen Fällen auch ein Formschluss zwischen den beiden Bauteilkomponenten einstellen. Allerdings müssen auch bei dieser Herstellungstechnik, ähnlich wie beim Einpressen, die beiden Bauteilkomponenten im Regelfall vorab sehr genau bearbeitet werden. Oft wird auch hier eine präzise Passung von beispielsweise H7 / s6 angestrebt. Eine Nachbearbeitung des fertigen Hybridbauteils kann in vielen Fällen notwendig sein. Dementsprechend ergibt sich auch bei dieser Herstellungstechnik oft ein hoher Herstellungsaufwand.

Außerdem kann beim thermischen Einschrumpfen herkömmlich nur der Wärmeausdehnungskoeffizient der Materialpaarung der zu verbindenden Bauteilkomponenten genutzt werden. Anders ausgedrückt kann ein Kraftschluss zwischen den beiden Bauteilkomponenten von den relativen Unterschieden bei der Wärmeausdehnung der beiden Bauteilkomponenten abhängen. Dementsprechend kann im späteren Gebrauch des Hybridbauteils eine Funktionalität des Hybridbauteils eingeschränkt sein bzw. nur über einen bestimmten Betriebstemperaturbereich ausreichend gegeben sein. Beispielsweise kann es bei einer übermäßigen Erwärmung einer der Bauteilkomponenten zu einem zumindest teilweisen Lösen des Kraftschlusses zwischen aneinander angrenzenden Bauteilkomponenten kommen.

Eine weitere Möglichkeit zum Herstellen von Hybridbauteilen wurde in der DE 101 27 626 A1 beschrieben. Zur Herstellung eines gebauten Werkstückes mit zwei kraft- und/oder formschlüssig miteinander verbundenen Elementen wird dabei zumindest ein erstes Element durch einen MIM-Prozess (Metal Injection Moulding) - d.h. durch Spritzgussformung eines Rohlings In Form eines Grünlings aus einer Kunststoff-Metallpulver-Mischung, nachfolgendes Austreiben des Kunststoffes zur Erzeugung eines Braunlings sowie darauf folgende Sinterung des Braunlings erzeugt. Eine bei der Sinterung auftretende Schrumpfung wird zur form- bzw. kraftschlüssigen Halterung eines weiteren Elementes in einer Ausnehmung am ersten Element ausgenutzt.

Allerdings wurde, wie weiter unten detaillierter ausgeführt, bisher davon ausgegangen, dass insbesondere aufgrund des bei dem vorgeschlagenen Verfahren eingesetzten Sinterns die beschriebene Herstellungstechnik nur zur Herstellung bestimmter Hybridbauteile, insbesondere zur Herstellung von Hybridbauteilen, bei denen alle Bauteilkomponenten metallisch sind, eingesetzt werden kann. Solche Hybridbauteile können jedoch nicht in allen Fällen vorgegebenen Randbedingungen und gewünschten Funktionalitäten gerecht werden.

### ZUSAMMENFASSUNG DER ERFINDUNG UND VORTEILHAFTER AUSFÜHRUNGSFORMEN

Es kann daher ein Bedarf an einem alternativen Verfahren zum Herstellen eines Hybridbauteils bestehen, mit dem in einfacher, zuverlässiger und/oder kostengünstiger Weise ein Hybridbauteil mit bestimmten physikalischen bzw. funktionellen Eigenschaften gefertigt werden kann und dabei die eingangs beschriebenen Defizite herkömmlicher Verfahren zumindest teilweise überwunden werden können. Insbesondere kann beispielsweise ein Bedarf an einem Verfahren zum Herstellen eines Hybridbauteils wie beispielsweise einer Elektrode oder Elektrodendurchführung bestehen, bei dem eine Bauteilkomponente beispielsweise für eine Durchleitung hoher elektrischer Leistungen und eine andere Bauteilkomponente beispielsweise für eine mechanische Anbindung an ein Gehäuse z.B. eines Abgaskanals sorgen kann, wobei eine weitere Bauteilkomponente eine ausreichende elektrische Isolation zwischen den anderen beiden Bauteilkomponenten bewirkt. Ferner kann ein Bedarf an einem entsprechend herstellbaren Hybridbauteil bestehen. Außerdem kann ein Bedarf daran bestehen, ein Hybridbauteil bereitzustellen, welches die genannten funktionellen Eigenschaften zuverlässig innerhalb eines großen Betriebstemperaturbereichs und/oder bei harschen Bedingungen mit angreifenden Kräften, Vibrationen und/oder Gasen bereitstellen kann.

Solchen Bedürfnissen kann mit dem Gegenstand eines der unabhängigen Ansprüche entsprochen werden. Vorteilhafte Ausführungsformen sind in den abhängigen Ansprüchen sowie der nachfolgenden Beschreibung definiert und in den begleitenden Figuren veranschaulicht.

Gemäß einem ersten Aspekt der vorliegenden Erfindung wird ein Verfahren zum Herstellen eines Hybridbauteils beschrieben. Das Verfahren umfasst zumindest die folgenden Schritte, vorzugsweise, aber nicht notwendigerweise, in der angegebenen Reihenfolge:
- Bereitstellen einer ersten Bauteilkomponente aus einem metallischen ersten Werkstoff,
- Bereitstellen einer zweiten Bauteilkomponente aus einem elektrisch isolierenden zweiten Werkstoff, wobei die zweite Bauteilkomponente als Hülse ausgebildet ist, die ein Innenvolumen umgibt, welches eine zu einer Außenkontur der ersten Bauteilkomponente komplementäre Innenkontur aufweist,
- Bereitstellen einer dritten Bauteilkomponente aus einem metallischen dritten Werkstoff, wobei die dritte Bauteilkomponente eine Ausnehmung aufweist, welche eine zu einer Außenkontur der zweiten Bauteilkomponente komplementäre Innenkontur aufweist,
- Bilden einer Gesamtbauteilanordnung durch Anordnen der ersten Bauteilkomponente in dem Innenvolumen der zweiten Bauteilkomponenten und Anordnen der zweiten Bauteilkomponente in der Ausnehmung der dritten Bauteilkomponente, und
- Sintern der Gesamtbauteilanordnung durch Erhitzen auf eine Sintertemperatur.

Die erste Bauteilkomponente und/oder die dritte Bauteilkomponente sind hierbei als Pulverrohling mit aneinander angrenzend angeordneten Metallpulverpartikeln derart ausgebildet, dass bei Erreichen der Sintertemperatur die Metallpartikel zusammensintern und dabei die jeweilige Bauteilkomponente eine auch nach Abkühlen unter die Sintertemperatur verbleibende Volumenänderung derart erfährt, dass die Außenkontur der ersten Bauteilkomponente und die Innenkontur der Ausnehmung der dritten Bauteilkomponente aufeinander zu verlagert werden.

Die zweite Bauteilkomponente ist dabei mit anorganischen, nicht-metallischen Fasern ausgebildet.

Gemäß einem zweiten Aspekt der vorliegenden Erfindung wird ein Hybridbauteil beschrieben, welches zumindest umfasst:
- eine erste Bauteilkomponente aus einem metallischen ersten Werkstoff,
- eine zweite Bauteilkomponente aus einem elektrisch isolierenden zweiten Werkstoff, wobei die zweite Bauteilkomponente als Hülse ausgebildet ist, welche die erste Bauteilkomponente presspassend umschließt, und
- eine dritte Bauteilkomponente aus einem metallischen dritten Werkstoff, wobei die dritte Bauteilkomponente eine Ausnehmung aufweist, welche die zweite Bauteilkomponente presspassend umschließt.

Die erste Bauteilkomponente und/oder die dritte Bauteilkomponente ist hierbei als Sinterbauteil ausgebildet, welches durch Sintern eines Pulverrohlings mit aneinander angrenzend angeordneten Metallpulverpartikeln ausgebildet ist. Die zweite Bauteilkomponente ist mit anorganischen, nicht-metallischen Fasern ausgebildet.

Kurz und ohne die Erfindung hierauf zu beschränken können Grundprinzipien zu dem hierin beschriebenen Verfahren und dem damit herstellbaren Hybridbauteil wie folgt skizziert werden:
Es wurde erkannt, dass ein aus drei sukzessive ineinandergreifenden Bauteilkomponenten zusammengesetztes Hybridbauteil in einfacher Weise hergestellt werden kann und dabei auch unter extremen Betriebsbedingungen, insbesondere extremen Temperaturen, zuverlässig betrieben werden kann, indem bei dessen Herstellung zumindest ein sogenanntes Sinterbauteil eingesetzt wird. Dabei kann die Eigenschaft eines solchen Sinterbauteils, beim Sintern signifikant sein Volumen bzw. seine Abmessungen zu verändern, vorteilhaft genutzt werden.

Beispielsweise kann die dritte Bauteilkomponente, welche mit ihrer Ausnehmung die erste und zweite Bauteilkomponente umschließt, als Sinterbauteil aus einem Pulverrohling ausgebildet sein. Der Pulverrohling kann hierbei aus Metallpulverpartikeln zusammengesetzt sein und derart ausgestaltet sein, dass es beim Sintern bei sehr hoher Temperatur stark schrumpft. Ein Maß einer dabei eintretenden Schrumpfung kann hierbei erheblich stärker sein, als dies lediglich durch einen Wärmeausdehnungskoeffizienten des Materials der Metallpulverpartikel begründet wäre, sodass die beim Schrumpfen auftretende Volumenänderung auch nach dem Abkühlen unter die Sintertemperatur weitgehend erhalten bleibt. Aufgrund einer solchen erheblichen Schrumpfung kann ein nach innen gerichteter Rand der Ausnehmung der dritten Bauteilkomponente nach dem Sintern mit erheblichen Kräften auf die darin aufgenommenen beiden anderen Bauteilkomponenten pressen und für einen mechanisch stabilen Zusammenschluss aller drei Bauteilkomponenten sorgen. Insbesondere können die durch das Schrumpfen beim Sintern bedingten Volumenänderungen der dritten Bauteilkomponente derart stark ausfallen, dass beim späteren Betrieb des Hybridbauteils innerhalb eines sehr großen Betriebstemperaturbereichs von beispielsweise 1000 °C oder sogar mehr trotz der dabei auftretenden thermisch bedingten Dimensionsänderungen an den verschiedenen Bauteilkomponenten stets ein ausreichend stabiler Zusammenschluss aller Bauteilkomponenten gewährleistet bleibt.

Dabei wurde erkannt, dass die zweite Bauteilkomponente, die zwischen den anderen beiden Bauteilkomponenten zwischengelagert ist und unter anderem für eine elektrische Isolation zwischen diesen beiden Bauteilkomponenten sorgen kann, insbesondere während des Sinterns im Rahmen des Herstellungsprozesses sowohl erheblichen thermischen Belastungen als auch erheblichen mechanischen Belastungen ausgesetzt sein kann. Es wurde beobachtet, dass hülsenartige zweite Bauteilkomponenten, welche beispielsweise aus einer monolithischen Keramik gefertigt sind, zwar den thermischen Belastungen alleine, oft aber nicht in Kombination mit den beim Sintern bewirkten mechanischen Belastungen und/oder den durch unterschiedliche Ausdehnungskoeffizienten hervorgerufenen Dehnungen und Spannungen standhalten können. Um die mechanischen Eigenschaften der zweiten Bauteilkomponente diesbezüglich geeignet zu modifizieren, wird vorgeschlagen, diese mit anorganischen, nichtmetallischen Fasern auszubilden, da diese Materialien höhere Bruchdehnungen bei geringer Steifigkeit ertragen können.

Nachfolgend werden mögliche Ausgestaltungen des Herstellungsverfahrens und des Hybridbauteils sowie damit einhergehende mögliche Vorteile in genaueren Einzelheiten beschrieben.

Bei dem hierin vorgeschlagenen Herstellungsverfahren werden wenigstens drei Bauteilkomponenten bereitgestellt und dann zu einer Gesamtbauteilanordnung zusammengesetzt. Die erste und die dritte Bauteilkomponente bestehen hierbei jeweils aus einem metallischen Werkstoff, wobei sich der für die erste Bauteilkomponente verwendete metallische erste Werkstoff von dem für die dritte Bauteilkomponente verwendeten metallischen dritten Werkstoff hinsichtlich einer Materialzusammensetzung und/oder eines mikroskopischen Aufbaus unterscheidet. Die zweite Bauteilkomponente besteht aus einem nichtmetallischen, elektrisch isolierenden zweiten Werkstoff.

Alle drei Werkstoffe sind dabei derart gewählt, dass sie hohen Betriebstemperaturen bis zu einer Maximalbetriebstemperatur von typischerweise über 800°C, beispielsweise 1100 °C, standhalten können, ohne signifikant irreversiblen Schaden zu nehmen. Der metallische erste Werkstoff kann außerdem mit einer hohen elektrischen Leitfähigkeit derart gewählt sein, dass die erste Bauteilkomponente als gut elektrisch leitfähige Elektrode zum Leiten hoher elektrischer Ströme dienen kann. Der elektrisch isolierende zweite Werkstoff kann mit einer niedrigen elektrischen Leitfähigkeit derart gewählt sein, dass die zweite Bauteilkomponente in der Lage ist, die erste Bauteilkomponente gegenüber der dritten Bauteilkomponente zuverlässig elektrisch zu isolieren. Der metallische dritte Werkstoff kann derart gewählt sein, dass die dritte Bauteilkomponente eine hohe mechanische Belastbarkeit aufweist und beispielsweise zum mechanischen Fixieren des gesamten Hybridbauteils an einer haltenden Struktur dienen kann.

Die drei Bauteilkomponenten sind hinsichtlich ihrer Geometrie derart ausgestaltet, dass die innenliegende erste Bauteilkomponente in das Innenvolumen der hülsenartigen zweiten Bauteilkomponente aufgenommen werden kann und die zweite Bauteilkomponente wiederum in die Ausnehmung in der dritten Bauteilkomponente eingebracht werden kann, um insgesamt die Gesamtbauteilanordnung zu bilden.

Die erste Bauteilkomponente kann hierbei als massives oder poröses Vollbauteil oder als innen hohles Hohlbauteil ausgestaltet sein. Die erste Bauteilkomponente kann beispielsweise eine zylindrische Außenkontur aufweisen. Die zweite Bauteilkomponente umgibt als Hülse ein Innenvolumen, welches hinsichtlich seiner Innenkontur komplementär zu der Außenkontur der ersten Bauteilkomponente ausgestaltet ist. Eine Wandstärke der zweiten Bauteilkomponente kann hierbei geeignet gewählt sein, um der zweiten Bauteilkomponente gewünschte elektrisch isolierende Eigenschaften verleihen zu können. Beispielsweise kann die Wandstärke im Bereich von 0,1 mm bis 10 mm, vorzugsweise im Bereich von 0,5 mm bis 5 mm, liegen. Die dritte Bauteilkomponente weist eine Ausnehmung, vorzugsweise eine durchgehende Ausnehmung, auf, deren Innenkontur komplementär zu der Außenkontur der zweiten Bauteilkomponente ist. Eine Außenkontur der dritten Bauteilkomponente kann dabei an deren Einsatzzweck angepasst sein und hinsichtlich ihrer Geometrieform der Innenkontur dieser Bauteilkomponente entsprechen oder sich von dieser unterscheiden.

Unter "komplementär" kann hierbei verstanden werden, dass zwei Konturen im Wesentlichen gleiche oder ähnliche Geometrieformen aufweisen, d.h., die Querschnitte beider Bauteilkomponenten beispielsweise kreisförmig, viereckig, polygonal o.ä. sind. Dabei können die beiden Konturen, d.h. die Kontur der innenliegenden Bauteilkomponente und die Kontur der diese umgebenden außenliegenden Bauteilkomponente, gleiche, ähnliche oder sich geringfügig unterscheidende Abmessungen aufweisen. Insbesondere können die Abmessungen der außenliegenden Kontur geringfügig größer sein als diejenigen der innenliegenden Kontur, sodass zwischen beiden Konturen ein kleiner, möglichst entlang des Konturumfangs gleichbleibender Spalt verbleibt.

Aufgrund der zueinander komplementären jeweiligen Konturen der drei Bauteilkomponenten können diese dann zu der Gesamtbauteilanordnung zusammengesetzt werden. Hierzu kann die erste Bauteilkomponente in das Innenvolumen der zweiten Bauteilkomponente eingelegt werden. Vorangehend, gleichzeitig oder nachfolgend kann die zweite Bauteilkomponente in die Ausnehmung der dritten Bauteilkomponente eingelegt werden.

Hierbei können die drei Bauteilkomponenten zunächst als separate Teile hergestellt bzw. bereitgestellt werden und erst nachträglich, aber vor dem Sintervorgang, zusammengesetzt werden. Bei einem solchen Zusammensetzen werden auf die Bauteilkomponenten allenfalls geringe Kräfte ausgeübt, insbesondere geringere Kräfte als dies beim herkömmlichen Einpressen der Fall ist. Insbesondere kann die erste Bauteilkomponente in das Innenvolumen der zweiten Bauteilkomponente und die zweite Bauteilkomponente in die Ausnehmung der dritten Bauteilkomponente lose, d.h. mit seitlichem Spiel, eingelegt werden. Dabei kann die dritte Bauteilkomponente im Bereich der Ausnehmung die darin aufgenommene zweite Bauteilkomponente und diese wiederum die darin aufgenommene erste Bauteilkomponente allseitig, ringförmig oder zumindest von gegenüberliegenden Seiten her umschließen.

Anschließend wird die Gesamtbauteilanordnung durch Erhitzen auf eine Sintertemperatur gesintert. Die Sintertemperatur kann hierbei derart hoch sein, dass es insbesondere in dem metallischen ersten und/oder dritten Werkstoff zu erheblichen Diffusionsvorgängen und/oder zumindest lokalen Aufschmelzungen kommen kann. Beispielsweise kann die Sintertemperatur oberhalb von 1000 °C, vorzugsweise oberhalb von 1100 °C oder sogar oberhalb von 1200 °C liegen. Insbesondere kann die Sintertemperatur höher sein als eine maximale Betriebstemperatur, bis zu der das zu fertigende Hybridbauteil bestimmungsgemäß betreibbar sein soll.

Bei dem Sintervorgang kommt zum Tragen, dass die erste Bauteilkomponente und/oder die dritte Bauteilkomponente als sogenannter Pulverrohling bereitgestellt werden.

Unter einem Pulverrohling kann in diesem Zusammenhang ein Rohling verstanden werden, der aus Metallpulverpartikeln zusammengesetzt ist. Die Metallpulverpartikel können auch als Metallpartikel bezeichnet werden. Die Metallpulverpartikel können dabei mikroskopisch kleine Abmessungen aufweisen, beispielsweise im Bereich von einigen Nanometern bis hin zu einigen Hundert Mikrometern, vorzugsweise im Bereich von etwa 100 nm bis etwa 250 µm. Die Metallpulverpartikel sind hierbei eng aneinander angrenzend angeordnet. Insbesondere liegen die Metallpulverpartikel vorzugsweise eng aneinander an. Anders ausgedrückt kontaktiert jedes Metallpulverpartikel mit seiner Außenoberfläche ein oder mehrere benachbarte Metallpulverpartikel oder ist relativ zu solchen benachbarten Metallpulverpartikeln zumindest derart eng benachbart angeordnet, dass ein Abstand zwischen benachbarten Metallpulverpartikeln im Vergleich zu Abmessungen der Metallpulverpartikel selbst vernachlässigbar klein ist. Beispielsweise kann ein etwaiger Abstand zwischen benachbarten Metallpulverpartikeln kleiner als 30 % oder sogar kleiner als 10% der durchschnittlichen Abmessungen der Metallpulverpartikel sein. Sofern benachbarte Metallpulverpartikel einander nicht direkt kontaktieren, kann ein Zwischenraum zwischen benachbarten Metallpulverpartikeln mit anderem, vorzugsweise festem Material wie zum Beispiel einem Binder gefüllt sein. Zwischen den benachbarten Metallpulverpartikeln herrscht dabei im Allgemeinen eine kraftschlüssige Verbindung und/oder in manchen Fällen eine formschlüssige Verbindung. Allerdings sind die meisten Metallpulverpartikel in dem Pulverrohling mit benachbarten Metallpulverpartikeln nicht stoffschlüssig verbunden. Aufgrund des Aufbaus aus einer Vielzahl von kleinen Metallpulverpartikeln bilden sich zwischen benachbarten Metallpulverpartikeln Übergänge bzw. Partikelgrenzen. Außerdem können die Metallpulverpartikel verschiedenste geometrische Formen aufweisen. Dementsprechend können sich zwischen benachbarten Metallpulverpartikeln Hohlräume bilden, in denen sich kein Metall, sondern ein anderes Material wie beispielsweise Luft oder BinderMaterial befindet. Anders ausgedrückt kann der Pulverrohling eine gewisse Porosität bzw. eine Vielzahl kleinerer Volumina aufweisen, die aus einem anderen als dem metallischen Werkstoff bestehen.

Während des Sinterns kann es zu einer teilweisen Verflüssigung von Metallpulverpartikeln in dem Pulverrohling der ersten Bauteilkomponente und/oder zu Diffusionen zwischen benachbarten Metallpulverpartikeln in diesem Pulverrohling kommen. Hierdurch kann der Pulverrohling als Ganzes seine Struktur, insbesondere seine mikroskopische Struktur bzw. granulare Struktur, verändern. Beispielsweise können benachbarte Metallpulverpartikel zumindest bereichsweise einen Stoffschluss miteinander eingehen. Grenzen zwischen benachbarten Metallpulverpartikeln können sich verschieben und/oder zumindest bereichsweise auflösen. Hohlräume zwischen benachbarten Metallpulverpartikeln können sich in Form und/oder Volumen verändern. Insbesondere kann der Pulverrohling durch das Sintern ein aus stoffschlüssig miteinander verbundenen Metallpartikeln gebildetes Diffusionsgefüge bilden.

Insgesamt kann der Pulverrohling, wie weiter unten detaillierter erläutert, während des Sinterns sein Volumen bzw. seine geometrischen Abmessungen verändern, d.h. schrumpfen oder expandieren. Hierdurch kann zwischen den Bauteilkomponenten ein enger Kraftschluss und/oder Formschluss etabliert werden. Dementsprechend können die Bauteilkomponenten relativ zueinander fixiert werden und somit die vor dem Sintern lose zusammengesetzte Bauteilanordnung zu einem als Einheit wirkenden, mechanisch stabilen Hybridbauteil verfestigt werden.

Das umschlossene Element sollte hierbei dabei eine ausreichende Druckfestigkeit aufweisen und einen angepassten Ausdehnungskoeffizienten, damit das umschlossene Element beim Abkühlen nicht zerstört wird oder zu stark kontrahiert.

Gemäß einer Ausführungsform sind Innenabmessungen der Ausnehmung der dritten Bauteilkomponente vor dem Sintern größer als entlang gleicher Achsen gemessene Außenabmessungen der in der Ausnehmung angeordneten zweiten Bauteilkomponente und/oder Innenabmessungen in dem Innenvolumen der zweiten Bauteilkomponente sind vor dem Sintern größer als entlang gleicher Achsen gemessene Außenabmessungen der in dem Innenvolumen angeordneten ersten Bauteilkomponente. Der Pulverrohling, welcher die dritte Bauteilkomponente bildet, ist hierbei derart ausgebildet, dass er während des Sinterns die auch nach Abkühlen unter die Sintertemperatur verbleibende Volumenänderung als Schrumpfung erfährt. Alternativ oder ergänzend ist der Pulverrohling, welcher die erste Bauteilkomponente bildet, derart ausgebildet, dass er während des Sinterns die auch nach Abkühlen unter die Sintertemperatur verbleibende Volumenänderung als Expansion erfährt. Eine Geometrie des Pulverrohlings der dritten und/oder der ersten Bauteilkomponente, Eigenschaften der Metallpulverpartikel des jeweiligen Pulverrohlings und Prozessparameter beim Sintern sind dabei derart gewählt, dass der Pulverrohling der dritten Bauteilkomponente beim Sintern in einem Maße schrumpft und/oder dass der Pulverrohling der ersten Bauteilkomponente beim Sintern in einem Maße expandiert, dass sich zwischen dem ersten, dem zweiten und dem dritten Bauteil sukzessive eine Presspassung einstellt.

Mit anderen Worten können insbesondere in einer Richtung, die quer zu einer Richtung verläuft, in der die jeweilige Bauteilkomponente in das Innenvolumen bzw. die Ausnehmung der sie umgebenden Bauteilkomponente eingeschoben wird, die Abmessungen der innenliegenden Bauteilkomponente anfänglich kleiner sein als diejenigen des Innenvolumens bzw. der Ausnehmung. Somit kann die innenliegende Bauteilkomponente in die außenliegende Bauteilkomponente mit einem gewissen seitlichen Spiel bzw. Freiraum eingebracht werden.

Beim anschließenden Sintern kann dann ausgenutzt werden, dass der Pulverrohling der dritten Bauteilkomponente während des Sinterns erheblich schrumpft und/oder der Pulverrohling der ersten Bauteilkomponente während des Sinterns erheblich expandiert. Eine Geometrie des Pulverrohlings der ersten und/oder dritten Bauteilkomponente, Eigenschaften der Metallpulverpartikel des Pulverrohlings und Prozessparameter beim Sintern können hierzu gezielt derart gewählt werden, dass der jeweilige Pulverrohling beim Sintern in einem Maße expandiert bzw. schrumpft, dass eine Presspassung zwischen den Bauteilkomponenten resultiert. Insbesondere kann der Pulverrohling der dritten Bauteilkomponente durch das Sintern derart stark schrumpfen, dass die Abmessungen der Ausnehmung in der dritten Bauteilkomponente beim Sintern bei nicht in die Ausnehmung eingebrachter zweiter Bauteilkomponente auf Abmessungen schrumpfen würden, die kleiner wären als die entlang gleicher Achsen gemessenen Abmessungen der in die Ausnehmung eingebrachten zweiten Bauteilkomponente, sodass bei in die Ausnehmung eingelegter zweiter Bauteilkomponente sich durch das Sintern eine kraftschlüssige Presspassung zwischen Innenoberflächen der dritten Bauteilkomponente im Bereich der Ausnehmung und gegenüberliegenden Außenoberflächen der zweiten Bauteilkomponente einstellt. Alternativ oder ergänzend kann der Pulverrohling der ersten Bauteilkomponente durch das Sintern derart stark expandieren, dass die Außenabmessungen der ersten Bauteilkomponente beim Sintern, wenn dieses nicht in die hülsenartige zweite Bauteilkomponente eingelegt wäre, auf Abmessungen expandieren würden, die größer wären als die entlang gleicher Achsen gemessenen Innenabmessungen der die ersten Bauteilkomponente umschließenden zweiten Bauteilkomponente, sodass bei in das Innenvolumen der zweiten Bauteilkomponente eingelegter erster Bauteilkomponente sich durch das Sintern eine kraftschlüssige Presspassung zwischen Innenoberflächen der zweiten Bauteilkomponente und gegenüberliegenden Außenoberflächen der ersten Bauteilkomponente einstellt.

Anders ausgedrückt können der Pulverrohling und der Sintervorgang gezielt derart angepasst werden, dass der Pulverrohling während des Sinterns auf die in der Ausnehmung in dem Pulverrohling aufgenommene zweite Bauteilkomponente aufschrumpft und dabei eine Presspassung erzeugt. Eine Schrumpfung während des Sintervorgangs kann dabei beispielsweise in einem Bereich von 3 % bis 30 %, typischerweise zwischen 10 % und 20 %, liegen.

Dabei kann eine Vielzahl verschiedener Einflussparameter ein Ausmaß der Schrumpfung und somit der sich einstellenden Presspassung beeinflussen.

Beispielsweise kann eine Geometrie des Pulverrohlings für die dritte Bauteilkomponente und insbesondere Abmessungen von dessen Ausnehmung so bemessen sein, dass vor dem Sintern die zweite Bauteilkomponente in der Ausnehmung mit seitlichem Spiel Platz findet, sich die Abmessungen der Ausnehmung jedoch beim Sintern durch das damit einhergehende Schrumpfen so weit verringern, d.h. das seitliche Spiel im Wesentlichen durch das Schrumpfen kompensiert wird, sodass die zweite Bauteilkomponente in der Ausnehmung eingepresst wird.

Auch die Art, Größe und/oder Struktur der Metallpulverpartikel sowie deren Anordnung relativ zueinander in dem Pulverrohling können einen Einfluss darauf haben, wie stark der Pulverrohling beim Sintern schrumpft. Dabei können die genannten Parameter beispielsweise beeinflussen, in welcher Weise sich Geometrien und/oder Korngrenzen zwischen benachbarten Metallpulverpartikeln während des Sintervorgangs verändern. Insbesondere können diese Parameter sich auf die mikroskopische Struktur des Pulverrohlings vor dem Sintern wie auch eventuell nach dem Sintern auswirken.

Dabei wurde es als vorteilhaft erkannt, wenn ein Gesamtvolumen aller Metallpulverpartikel in dem Pulverrohling der ersten bzw. dritten Bauteilkomponente vor dem Sintern kleiner ist als 90 %, vorzugsweise kleiner als 85 %, kleiner als 80 % oder sogar kleiner als 75 %, des Volumens der ersten Bauteilkomponente.

Anders ausgedrückt kann das Gesamtvolumen aller Metallpulverpartikel kleiner oder gleich einem Volumen aller mikroskopischer Volumenbereiche zwischen benachbarten Metallpulverpartikeln sein. Solche mikroskopischen Volumenbereiche können auch als Hohlraumvolumen interpretiert werden, wobei die Volumenbereiche nicht leer, sondern mit Gas, insbesondere Luft, oder mit einem von dem metallischen Werkstoff der ersten bzw. dritten Bauteilkomponente verschiedenen Material wie beispielsweise einem Binder gefüllt sind.

Ein relativ kleines Verhältnis von Gesamtvolumen aller Metallpulverpartikel zu Volumen der ersten bzw. dritten Bauteilkomponente vor dem Sintern führt typischerweise dazu, dass der Pulverrohling während des Sinterns stark schrumpft und sich somit eine gewünschte Presspassung mit der zweiten Bauteilkomponente einstellen kann.

Alternativ kann insbesondere die innenliegende erste Bauteilkomponente derart ausgestaltet sein, dass deren Pulverrohling aufgrund eines Sintervorgangs nicht schrumpft sondern in Form einer Volumenzunahme expandiert. Beispielsweise können hierzu in dem Pulverrohling sowohl Eisenpartikel als auch Kupferpartikel enthalten sein. Während des Sinterns kann es dann zu Diffusionsvorgängen zwischen den Eisen-und Kupferpartikeln kommen, wobei eine sich dabei ergebende Mischung oder Legierung eine geringere Dichte aufweist als bei den reinen Eisen- und Kupferpartikeln, sodass sich eine Volumenzunahme einstellt. Typische Werkstoffe sind hierbei beispielsweise FeCu1,2, FeCu5, FeCu10 und FeCu20, eventuell mit zusätzlichen Additiven.

Das Verhalten von Bauteilkomponenten während des Sinterns hängt im Allgemeinen stark von deren Materialzusammensetzung ab. Beispielsweise kann der metallische Werkstoff der ersten und/oder dritten Bauteilkomponente wenigstens ein Metall ausgewählt aus der Gruppe umfassend Eisen (Fe), Kupfer (Cu), Molybdän (Mo), Nickel (Ni), Chrom (Cr), Titan (Ti), Kobalt (Co) und Zinn (Sn) enthalten.

Die genannten Metalle können als Hauptbestandteil oder als Zusatz in dem metallischen Werkstoff enthalten sein. Insbesondere kann es sich bei dem metallischen Werkstoff um eine Legierung oder Mischung handeln, die ein oder mehrere der genannten Metalle enthält. Beispielsweise kann der metallische Werkstoff Messing sein. Unter Messing wird dabei eine Kupferlegierung mit bis zu 40 % Zink verstanden. Alternativ kann der metallische Werkstoff eine Bronze sein. Als Bronzen werden Legierungen mit mindestens 60 % Kupfer bezeichnet, soweit sie nicht durch den Hauptlegierungszusatz Zink den Messingen zuzuordnen sind.

Gemäß einer Ausführungsform kann der Pulverrohling der ersten bzw. dritten Bauteilkomponente mittels Metallpulverspritzgießen gefertigt sein.

Das Metallpulverspritzgießen, auch MIM-Verfahren (englisch für Metal Injection Moulding), ist ein Urformverfahren zur Herstellung von metallischen Bauteilen mit komplexer Geometrie. Es hat Ähnlichkeiten zu der bei der Verarbeitung von Kunststoffen eingesetzten Spritzgusstechnologie. Beim Metallpulverspritzgießen wird feines Metallpulver im Allgemeinen mit einem organischen Binder vermischt und dann mithilfe einer Spritzgussmaschine in Form gebracht. Das hierbei entstehende Zwischenprodukt wird meist als Grünteil bezeichnet. In dem Grünteil können die Metallpulverpartikel aneinander angrenzen und der Binder kann für einen zusätzlichen Kraftschluss zwischen benachbarten Metallpulverpartikeln sorgen. Anschließend wird der Binder entfernt, um ein Braunteil zu erzeugen, und das so entstandene Bauteil bei hoher Temperatur in einem Ofen gesintert. Als Ergebnis wird regelmäßig ein rein metallisches Enderzeugnis erhalten, das die mechanischen Vorteile gesinterter Bauteile mit der großen Formgebungsvielfalt des Spritzgießens verbindet.

Das Metallpulverspritzgießen erlaubt eine Vielzahl von Vorteilen. Unter anderem können mithilfe des Metallpulverspritzgießens Bauteile mit komplexer Geometrie gefertigt werden. Herstellungskosten können dabei relativ gering bleiben. Insbesondere kann eine Reproduzierbarkeit auch in sehr großen Stückzahlen erreicht werden. Bauteile können bei geringen Stückkosten einbaufertig und in allen Veredelungsstufen hergestellt werden. Aufgrund hoher Material- und Energieeffizienz lassen sich Bauteile umweltfreundlich und ressourcenschonend herstellen. Dabei können schlanke, stabile Prozesse (LeanSigma) eingesetzt werden und auch bei komplexen Geometrien können enge Toleranzen eingehalten werden. Auch eine Gewichtseinsparung gegenüber Teilen aus anderen Herstellungsverfahren sowie letztendlich eine Recyclingfähigkeit kann vorteilhaft sein.

Gemäß einer alternativen Ausführungsform kann der Pulverrohling der ersten bzw. dritten Bauteilkomponente durch Pressen von Metallpulver in eine vordefinierte Form gefertigt sein.

Eine dabei eingesetzte Technik wird auch als axiale Presstechnik bezeichnet. Dabei wird ein Rohpulver aus kleinen Metallpulverpartikeln verarbeitet. Gegebenenfalls können verschiedene Rohpulver miteinander gemischt werden. Mit mechanischen, hydraulischen und/oder elektrischen Pressen kann das Rohpulver in formgebenden Werkzeugen zu handhabbaren Bauteilkomponenten verpresst werden, welche in diesem Verfahrensstadium wiederum als Pulverrohlinge bezeichnet werden. Die Pressen können hierbei typischerweise Kräfte im Bereich von 30 kN bis hin zu 8000 kN ausüben. Hierdurch können benachbarte Metallpulverpartikel in flächige Anlage miteinander verpresst werden und dann kraftschlüssig aneinander halten.

Ein beim Sintern auftretendes Schrumpfungsverhalten von Pulverrohlingen, die durch Pressen von Metallpulver erzeugt wurden, kann dabei unter anderem von Eigenschaften des verwendeten Rohpulvers oder einer Mischung verschiedener Rohpulver beeinflusst werden, aber auch durch die Art, wie das Pulver verpresst wird.

Eine Fertigung von Bauteilkomponenten mithilfe axialer Presstechnik kann dabei viele der oben bereits für das Metallpulverspritzgießen erläuterten Vorteile ermöglichen. Im Vergleich zum Metallpulverspritzgießen ist eine Fertigung von Pulverrohlingen durch Pressen von Metallpulver jedoch meist kostengünstiger. Es können dabei allerdings vor allem Bauteilkomponenten mit einfachen Geometrien gefertigt werden.

Gemäß einer weiteren alternativen Ausführungsform kann der Pulverrohling durch additive Fertigung durch sukzessives Aufbringen mehrerer Lagen einer Metallpulver-haltigen Masse gefertigt werden.

Unter additiver Fertigung, welche manchmal auch als 3-D Druck bezeichnet wird, werden Fertigungsverfahren verstanden, bei denen Material Schicht für Schicht aufgetragen wird, um dreidimensionale Gegenstände zu erzeugen. Dabei können Metallpulverpartikel schichtweise lose oder in einem Matrixmaterial aufgenommen sukzessive auf einem Trägersubstrat bzw. auf zuvor ausgebildeten Teilen eines zu bildenden Produkts aufgebracht und anschließend verfestigt werden. Beispielsweise können beim sogenannten SLS-Verfahren (Selektives Lasersintern) Metallpulverpartikel schichtartig aufgebracht werden und dann mithilfe eines Lasers lediglich in gewünschten Bereichen miteinander zusammengesintert oder verschmolzen werden, wobei Partikel in ungelaserten Bereichen anschließend wieder entfernt werden können. Mithilfe additiver Fertigung können auf diese Weise Pulverrohlinge gebildet werden, die ähnliche Eigenschaften aufweisen und/oder mit ähnlichen Vorteilen hergestellt werden können, wie zuvor für das Metallpulverspritzgießen bzw. das Pressen von Pulverrohlingen beschrieben.

Durch das beim Sintern auftretende Schrumpfen bzw. Expandieren des als dritte bzw. erste Bauteilkomponente wirkenden Pulverrohlings werden erhebliche Kräfte auf die zwischen der ersten und der dritten Bauteilkomponente zwischengelagerte hülsenartige zweite Bauteilkomponente ausgeübt. Es wurde erkannt, dass zum Erreichen einer gewünschten Presspassung zwischen den drei Bauteilkomponenten vorteilhaft die zweite Bauteilkomponente eine zumindest geringfügige schädigungsfreie Verformbarkeit aufweisen sollte.

Insbesondere sollte gemäß einer Ausführungsform der zweite Werkstoff, das heißt der Werkstoff der zweiten Bauteilkomponente, eine Bruchdehnung von wenigstens 0,1 %, vorzugsweise wenigstens 0,2 %, aufweisen.

Aufgrund einer solchen substantiellen Bruchdehnung kann sich die zweite Bauteilkomponente bei den beim Sintern auf sie wirkenden Schrumpfkräften radial nach innen bzw., alternativ, bei denen beim Sintern auf sie wirkenden Expansionskräften radial nach außen verformen. Anders ausgedrückt kann die zweite Bauteilkomponente, wenn sie von der sie umgebenden dritten Bauteilkomponente während deren sinter-bedingtem Schrumpfprozess nach radial innen gedrückt wird, diesem Druck zumindest geringfügig nachgeben und sich hin zu der innenliegenden ersten Bauteilkomponente verformen. Auf diese Weise kann insgesamt eine Presspassung sowohl zwischen der dritten und der zweiten Bauteilkomponente als auch zwischen der zweiten und der ersten Bauteilkomponente erreicht werden. Alternativ kann die zweite Bauteilkomponente, wenn sie von der von ihr umgebenen ersten Bauteilkomponente während deren sinterbedingtem Expansionsprozess nach radial außen gedrückt wird, diesem Druck zumindest geringfügig nachgeben und sich hin zu der sie umgebenden dritten Bauteilkomponente verformen. Auch in diesem Fall kann wieder insgesamt eine Presspassung zwischen allen drei Bauteilkomponenten erreicht werden.

Es wurde beobachtet, dass beispielsweise monolithische Keramikbauteile, die als Hülsen ausgebildet werden und ähnlich wie die hierin beschriebene zweite Bauteilkomponente von einer innenliegenden oder einer außenliegenden weiteren Bauteilkomponente bei deren Expansion oder Schrumpfen mit erheblichen Kräften beaufschlagt werden, diesen Kräften im allgemeinen nicht standhalten können. Dies wird unter anderem darauf zurückgeführt, dass solche monolithische Keramikbauteile zwar eine hohe Festigkeit aufweisen, aber lediglich eine sehr geringe Bruchdehnung besitzen, sodass bei Überschreiten bestimmter Kraftgrenzen keine Verformung der keramischen Hülse sondern ein Bruch derselben auftritt.

Daher wird vorgeschlagen, bei dem hierin beschriebenen Herstellungsverfahren die zweite Bauteilkomponente gezielt mit anorganischen, nichtmetallischen Fasern auszubilden, wobei diese dazu beitragen können, eine Bruchdehnung des für diese Bauteilkomponente eingesetzten zweiten Werkstoffs auf ein gewünschtes Maß zu steigern. Der zweite Werkstoff kann dementsprechend auch als faserverstärkt oder faserbasiert bezeichnet werden.

Insbesondere kann gemäß einer Ausführungsform die zweite Bauteilkomponente mit keramischen Fasern und/oder Basalt- sowie Glasfasern ausgebildet werden.

Keramische Fasern bestehen aus einem anorganischen, nichtmetallischen Material und sind typischerweise polykristallin oder amorph. Beispielsweise können Keramikfasern aus einer polymeren Vorstufe durch Pyrolyse erzeugt werden. Wichtige nichtoxidische Fasern sind auf Basis SiC, SiCN, SiBNC oder Kohlenstoff (C). Die keramischen Fasern können als oxidische Fasern ausgebildet sein und beispielsweise über Trockenspinnverfahren hergestellt werden, insbesondere auf Basis von Aluminium (Al), d.h. beispielsweise als Aluminiumoxid, oder auf Basis von Aluminium und Silizium, d.h. beispielsweise als Mullit, ausgebildet sein. Zusätzlich können weitere Stoffe wie Eisen (Fe), Magnesium (Mg), Kalzium (Ca), Titan (Ti), Zirkonium (Zr), Yttrium (Y), Bor (B) bzw. deren Oxide beigemischt sein. Solche Fasern sind im Allgemeinen polykristallin. Alternativ können die keramischen Fasern als nicht-oxidische Fasern ausgebildet sein, beispielsweise als Siliziumcarbidfasern. Keramische Fasern können eine sehr hohe Zugfestigkeit und Dehnbarkeit aufweisen. Außerdem können keramische Fasern sehr hohen Temperaturen bis beispielsweise 1100 °C, 1200 °C oder sogar mehr schädigungsfrei standhalten.

Glasfasern oder Basaltfasern werden im Regelfall durch Ziehen aus einer Schmelze hergestellt. Sie sind im Allgemeinen amorph. Sie können ähnliche mechanische und temperaturresistente Eigenschaften aufweisen wie keramische Fasern.

Die zum Bilden der zweiten Bauteilkomponente verwendeten keramischen Fasern bzw. Glasfasern können eine sehr geringe Dicke beispielsweise in einem Bereich von 5 µm bis 500 µm, vorzugsweise 10 µm bis 20 µm, aufweisend. Die Fasern können insbesondere als Langfasern ausgebildet sein und zu Rovings (Faserbündeln) mit bis zu 50k Einzelfilamenten zusammengefasst sein. Vorzugsweise können die Faserrovings derart angeordnet sein, dass sie ein Gewebe, Gelege, Vlies oder Ähnliches bilden. Dabei können die Fasern eine Schicht bilden. Diese Schicht kann beispielsweise eine Wandung der hülsenartigen zweiten Bauteilkomponente bilden. Innerhalb der Schicht können die Fasern in einer ausreichenden Dichte vorgesehen sein, um der zweiten Bauteilkomponente eine gewünschte mechanische Belastbarkeit zu geben. Außerdem können die Fasern in einer ausreichenden Schichtdicke, Dichte und Ausrichtung relativ zueinander vorgesehen sein, sodass die damit ausgebildete zweite Bauteilkomponente selbst bei starker radialer Druckbeanspruchung nur in einem Maße zusammengepresst wird, bei der die Wandung der Bauteilkomponente noch ausreichend dick ist, um für eine gewünschte elektrische Isolation zwischen daran angrenzenden anderen Bauteilkomponenten zu sorgen. Beispielsweise sollte eine solche Wandung je nach Anwendung zwischen 0,1 mm und 10 mm, vorzugsweise zwischen 0,3 mm und 3 mm, dick sein.

Die hülsenartige zweite Bauteilkomponente kann lediglich aus den Keramikfasern bzw. Glasfasern bestehen. Beispielsweise können die Fasern zu einer Art Schlauch geflochten, verwoben, versponnen oder gelegt sein.

Gemäß einer Ausführungsform kann die zweite Bauteilkomponente mit einem oxidkeramischen Verbundwerkstoff ausgebildet sein.

Oxidkeramische Verbundwerkstoffe werden teilweise auch als OFC-Werkstoffe (Oxide Fiber Ceramics) oder OCMC-Werkstoffe (Oxide Ceramic Matrix Composites) bezeichnet. Bei ihnen sind oxidkeramische Fasern in einer oxidkeramischen Matrix eingebettet. Sie weisen ähnliche vorteilhafte Eigenschaften wie monolithische Keramiken auf, etwa Hochtemperaturbeständigkeit, Korrosionsbeständigkeit, hohe Festigkeit. Der E-Modul ist im Vergleich zu monolithischen Keramiken geringer, wohingegen die Bruchdehnung deutlich höher ist. Im Gegensatz zu monolithischen Keramiken weisen sie darüber hinaus kein sprödes Bruchverhalten, sondern ein schadenstolerantes, quasi-duktiles Bruchverhalten auf. Dieses quasi-duktile Bruchverhalten entsteht insbesondere durch energiedissipierende Effekte, d.h. durch eine typischerweise schwache Anbindung zwischen den Fasern und der umgebenden porösen Matrix, wodurch zum Beispiel Risse oder Brüche nicht direkt von der Matrix in die Fasern eingeleitet werden, sondern parallel zu diesen abgelenkt oder verzweigt werden bzw. durch Mikrorissbildung an Energie verlieren. Die eingelagerten Fasern dienen dabei vornehmlich einer Erhöhung der Bruchzähigkeit im Vergleich zu einer dichten, monolithischen Keramik. Daher weisen solche Verbundwerkstoffe im Gegensatz zu monolithischen Keramiken eine ausgezeichnete Thermoschockbeständigkeit auf. Der oxidkeramische Verbundwerkstoff kann ferner beispielsweise ein E-Modul von weniger als 100 GPa aufweisen und Bruchdehnungen von über 0,4 % erreichen. Der Wärmeausdehnungskoeffizient ist vor allem abhängig von den eingesetzten Fasern und entspricht im Allgemeinen der monolithischen Variante. Im Falle von Fasern auf Basis von Aluminiumoxid oder Mullit liegt der Wärmeausdehnungskoeffizient meist im Bereich von 4 bis 10 ppm/K.

Die Formgebung der oxidkeramischen Verbunde kann ausgehend von flächigen gewebeverstärkten oder kurzfaserverstärkten oxidkeramischen Prepregs erfolgen, die mittels eines Autoklavverfahrens verdichtet werden. Im Falle der Herstellung von rotationssymmetrischen rohrförmigen Teilen eignen sich jedoch Faserwickelverfahren, bei dem matrixgetränkte Rovingstränge auf einem rotierenden Kern abgelegt werden. Die Faserarchitektur sollte so gewählt werden, dass Verformungen begünstigt und Belastungen schädigungsfrei aufgenommen werden können. Abgeschlossen wird die Herstellung von OFC im Allgemeinen mit einem Sinterprozess bei Temperaturen oberhalb von 1000 °C. Um die Endgeometrie der zweiten Bauteilkomponente zu erhalten, kann eine mechanische Bearbeitung durch Sägen, Fräsen, Laser- oder Wasserstrahlschneiden notwendig sein.

Gemäß einer Ausführungsform weist der erste Werkstoff einen Ausdehnungskoeffizient α₁, der zweite Werkstoff einen Ausdehnungskoeffizient α₂ und der dritte Werkstoff einen Ausdehnungskoeffizient α₃ auf, und es gilt α₂ < α₁ < α₃.

Mit anderen Worten wurde herausgefunden, dass eine spezielle Auswahl der für die drei Bauteilkomponenten jeweils verwendeten Werkstoffe hinsichtlich deren Wärmeausdehnungskoeffizienten zu vorteilhaften Eigenschaften des damit hergestellten Hybridbauteils führen kann bzw. dass der Nachteil des geringen Ausdehnungskoeffizienten der keramischen Komponente überwunden werden kann. Außerdem sollte der Wärmeausdehnungskoeffizient α₁ des ersten Werkstoffs für die innenliegende erste Bauteilkomponente vorzugsweise kleiner sein als der Wärmeausdehnungskoeffizient α₃ des dritten Werkstoffs für die außenliegende dritte Bauteilkomponente.

Durch die spezielle Wahl der Wärmeausdehnungskoeffizienten kann, wie weiter unten mit Bezug auf ein konkretes Beispiel des erfindungsgemäßen Herstellungsverfahrens beschrieben, während des Sinterns beim anfänglichen Aufheizen und beim anschließenden Abkühlen ein vorteilhaftes Ausdehnungsverhalten der verschiedenen Bauteilkomponenten relativ zueinander erreicht werden.

Insbesondere kann gemäß einer konkretisierten Ausführungsform der Wärmeausdehnungskoeffizient α₂ < 12 ppm/K sein und/oder α₃ < 25 ppm/K sein. Eine derartige Wahl der Wärmeausdehnungskoeffizienten kann sich besonders vorteilhaft bei der hierin beschriebenen Herstellung des Hybridbauteils auswirken.

Eine Ausführungsform des Hybridbauteils gemäß dem zweiten Aspekt der Erfindung kann mithilfe einer Ausführungsform des hierin zuvor beschriebenen Herstellungsverfahrens gefertigt sein und kann somit sich durch die Herstellung ergebende Merkmale aufweisen.

Dabei kann das Hybridbauteil mit seiner ersten Bauteilkomponente und/oder seiner dritten Bauteilkomponente als Sinterbauteil ausgebildet sein. Ein solches Sinterbauteil ergibt sich durch das Entbindern eines Grünteils, speziell eines MIM-Technologie, Presstechnologien bzw. über additive Technologien hergestellten Bauteils, und anschließendes Sintern. Es weist typischerweise ein aus stoffschlüssig miteinander verbundenen Metallpulverpartikeln gebildetes Diffusionsgefüge auf, bei dem Metallpulverpartikel durch Sintern zumindest bereichsweise stoffschlüssig miteinander verbunden sind. Eine solche Struktur kann eventuell auch als eine granulare Struktur bezeichnet werden. Anders ausgedrückt können die Metallpulverpartikel in der durch das Sinterbauteil gebildeten Bauteilkomponente zumindest bereichsweise mit benachbarten Metallpulverpartikeln verschmolzen und/oder durch Diffusionsprozesse verbunden sein. Eine solche Struktur ergibt sich typischerweise, wenn eine Bauteilkomponente aus einem zuvor aus Metallpulverpartikeln zusammengesetzten Werkstoff bei hohen Temperaturen gesintert wird. Die granulare Struktur unterscheidet sich dabei grundsätzlich von mikroskopischen Strukturen, wie sie bei herkömmlichen, beispielsweise aus massivem Material gefertigten Bauteilkomponenten zu beobachten sind.

Neben dem Vorteil, dass ein Hybridbauteil mit der beschriebenen granularen Struktur mit dem oben angegebenen Verfahren vorteilhaft hergestellt werden kann, kann die granulare Struktur für das Hybridbauteil selbst auch vorteilhafte Eigenschaften bewirken wie zum Beispiel eine hohe Festigkeit bei gleichzeitig vergleichsweise niedrigem Gewicht.

Gemäß einer Ausführungsform kann bei dem Hybridbauteil an einer Grenzfläche, an der die erste Bauteilkomponente mit einer außenliegenden Oberfläche an eine gegenüberliegende innenliegende Oberfläche der zweiten Bauteilkomponente angrenzt, und/oder an einer Grenzfläche, an der die zweite Bauteilkomponente mit einer außenliegenden Oberfläche an eine gegenüberliegende innenliegende Oberfläche in der Ausnehmung der dritten Bauteilkomponente angrenzt, eine an der jeweiligen außenliegenden Oberfläche ausgebildete Oberflächenstruktur in eine zu dieser komplementär ausgebildete Oberflächenstruktur an der jeweils gegenüberliegenden innenliegenden Oberfläche eingreifen.

Mit anderen Worten kann das Hybridbauteil eventuell bedingt durch Eigenschaften des oben angegebenen Herstellungsverfahrens eine spezielle mikroskopische Struktur an der Grenzfläche zwischen dessen Bauteilkomponenten aufweisen. Diese mikroskopische Struktur kann beispielsweise dadurch entstehen, dass zumindest eine oder vorzugweise beide der Bauteilkomponenten vor dem Sintern nicht speziell bearbeitet zu werden braucht, um deren Oberfläche zu glätten. Dementsprechend kann die Oberfläche der jeweiligen Bauteilkomponenten dort, wo diese aneinander angrenzen, eine zumindest mikroskopische Rauigkeit aufweisen. Alternativ oder ergänzend können die Oberflächen der beiden Bauteilkomponenten gezielt mit einer zueinander komplementär ausgestalteten Oberflächenstruktur, beispielsweise in Form einer Mikroverzahnung, ausgebildet werden. Mikroskopische Vorsprünge und/oder Vertiefungen, wie sie von den jeweiligen Oberflächenstrukturen gebildet werden, können sich während des durch das Sintern bedingten Schrumpf- bzw. Expansionsvorgangs in die jeweils andere Bauteilkomponente einpressen und dabei zu einem Ineinandergreifen bzw. einer Mikroverzahnung zwischen den gegenüberliegenden Oberflächen der beiden Bauteilkomponenten führen. Die Abmessungen der Oberflächenstruktur können dabei typischerweise zwischen einigen Zehntelmikrometern und einigen 10 µm betragen.

Während mikroskopische Strukturen an Oberflächen von miteinander zu verbindenden Bauteilkomponenten bei herkömmlichen Herstellungsverfahren meist bereits vorab durch geeignete Bearbeitung entfernt wurden oder spätestens während des Zusammenfügens, beispielsweise im Rahmen des Einpressens oder thermischen Schrumpfens, geglättet (insbesondere abgeschert oder abgebrochen) wurden, können solche mikroskopischen Strukturen bei dem hierin beschriebenen Herstellungsverfahren das sinter-bedingte Einschrumpfen oft im Wesentlichen unverändert überstehen. Dementsprechend kann der sich ergebende komplementäre Eingriff zwischen aneinander angrenzenden Oberflächenstrukturen bzw. die sich ergebende Mikroverzahnung als typisches Merkmal bei durch das beschriebene Herstellungsverfahren erzeugten Hybridbauteilen auftreten. Der Eingriff bzw. die Mikroverzahnung kann dabei ferner für einen besonders effizienten Halt zwischen den beiden Bauteilkomponenten sorgen.

Es wird darauf hingewiesen, dass mögliche Merkmale und Vorteile von Ausführungsformen der Erfindung hierin teilweise mit Bezug auf ein erfindungsgemäß ausgestaltetes Herstellungsverfahren und teilweise mit Bezug auf ein erfindungsgemäß ausgestaltetes Hybridbauteil beschrieben sind. Ein Fachmann wird erkennen, dass die für einzelne Ausführungsformen beschriebenen Merkmale in analoger Weise geeignet auf andere Ausführungsformen übertragen werden können, angepasst werden können und/oder ausgetauscht werden können, um zu weiteren Ausführungsformen der Erfindung und möglicherweise Synergieeffekten zu gelangen.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind.
Fig. 1 zeigt eine Schnittansicht durch ein Hybridbauteil in Form einer Elektrode gemäß einer Ausführungsform der vorliegenden Erfindung.
Fig. 2 veranschaulicht in Querschnittsansichten eine Sequenz von Verfahrensstadien während eines Herstellungsverfahrens gemäß einer Ausführungsform der vorliegenden Erfindung.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VON VORTEILHAFTEN AUSFÜHRUNGSFORMEN

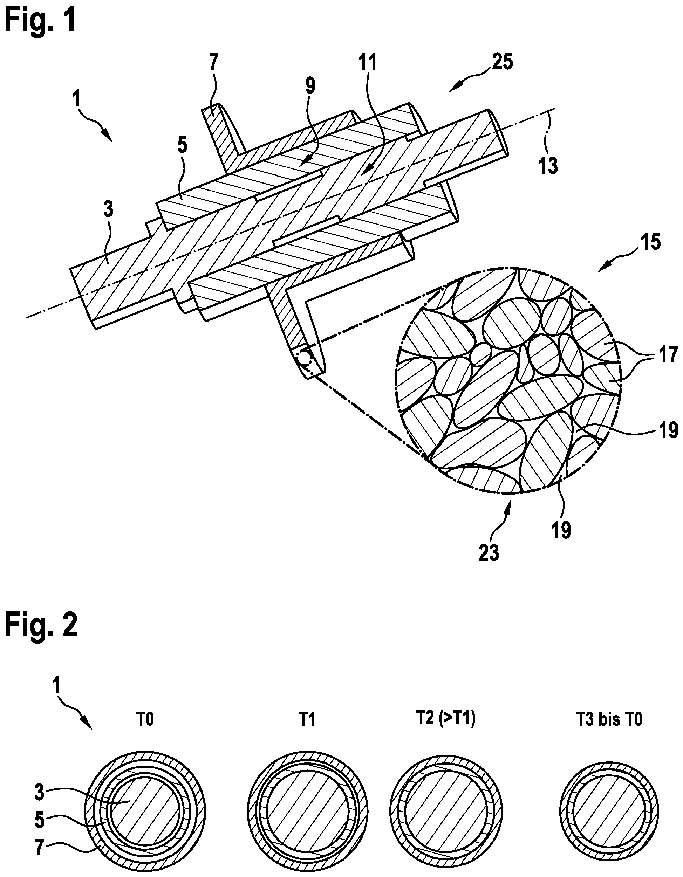

Fig. 1 zeigt ein beispielhaftes Hybridbauteil 1 in Form einer Elektrode für eine Katalysatorvorheizung in einem Kraftfahrzeug.

Das Hybridbauteil 1 setzt sich aus einer innenliegenden ersten Bauteilkomponente 3 in Form einer Seele, einer außenliegenden dritten Bauteilkomponente 7 in Form einer Halterung und einer zwischen der ersten und dritten Bauteilkomponente 3, 7 zwischengelagerten hülsenartigen zweiten Bauteilkomponente 5, welche als Isolationskörper dient, zusammen. Die erste und die dritte Bauteilkomponente 3, 7 bestehen dabei aus einem metallischen Werkstoff, wohingegen die zweite Bauteilkomponente 5 aus einem nicht-metallischen, elektrisch isolierenden Werkstoff besteht und insbesondere mit anorganischen, nicht-metallischen Fasern ausgebildet ist. Die zweite Bauteilkomponente 5 ist hierbei in einer Ausnehmung 9 der dritten Bauteilkomponente 7 aufgenommen und nimmt ihrerseits die erste Bauteilkomponente 3 in ihrem Innenvolumen 11 auf. Alle Bauteilkomponenten 3, 5, 7 sind rotationssymmetrisch um eine Rotationsachse 13 ausgeführt.

Wie in dem vergrößerten Ausschnitt in Fig. 1 dargestellt, weist im dargestellten Beispiel die dritte Bauteilkomponente 7 eine mikroskopische granulare Struktur 15 mit einem aus stoffschlüssig miteinander verbundenen Metallpulverpartikeln 17 gebildeten Diffusionsgefüge auf. Metallpulverpartikel 17 grenzen dabei an benachbarte Metallpulverpartikel 17. Da die Metallpulverpartikel 17 unregelmäßige Formen und Größen aufweisen können, bilden sich zwischen benachbarten Metallpulverpartikeln 17 Hohlräume 19. Während die Hohlräume 19 während eines Zwischenstadiums des weiter unten beschriebenen Herstellungsverfahrens, in dem die dritte Bauteilkomponente 7 als Pulverrohling 23 in Form eines Grünteils oder Braunteils vorliegt, noch verhältnismäßig große Volumina haben können, sind sie beim fertigen Hybridbauteil 1 meist nur noch sehr kleinvolumig oder die ursprünglich im Pulverrohling 23 bzw. dem daraus durch Sintern entstehenden Produkt vorhandene poröse granulare Struktur 15 ist hauptsächlich anhand verbleibender Partikelgrenzen in der dritten Bauteilkomponente 7 des fertigen Hybridbauteils 1 erkennbar. Während im Grünteil benachbarte Metallpulverpartikel 17 in der Regel lediglich kraftschlüssig und/oder formschlüssig zusammenwirken, können benachbarte Metallpulverpartikel 17 nach einem Sintervorgang im fertigen Hybridbauteil 1 zumindest bereichsweise stoffschlüssig miteinander verbunden sein.

Aufgrund des nachfolgend detaillierter beschriebenen Verfahrens, mit dem das Hybridbauteil 1 hergestellt wurde, sitzen die erste, zweite und dritte Bauteilkomponente 3, 5, 7 mit einer Presspassung koaxial ineinander, wobei die jeweiligen Bauteilkomponenten 3, 5, 7 an einer Grenzfläche kraftschlüssig und zum Teil gegebenenfalls auch formschlüssig miteinander zusammenwirken.

Zur Herstellung des dargestellten Hybridbauteils 1 werden zunächst die erste, zweite und dritte Bauteilkomponente 3, 5, 7 als separate Komponenten hergestellt und bereitgestellt.

Die erste Bauteilkomponente 3 ist im dargestellten Beispiel ein massives Bauteil, welches aus einem elektrisch gut leitfähigen Metall besteht und beispielsweise gegossen oder durch abtragende Verfahren wie Drehen aus einem Vollmaterial hergestellt wurde. Die erste Bauteilkomponente 3 weist dabei eine längliche, zylindrische Geometrie auf.

Die zweite Bauteilkomponente 5 ist eine keramische Hülse mit zylindrischer Wandung, deren Innendurchmesser geringfügig größer ist als ein Außendurchmesser der ersten Bauteilkomponente 3. Im dargestellten Beispiel wird diese Hülse aus einem oxidkeramischen Verbundwerkstoff hergestellt. Dabei sind lange Fasern, insbesondere Keramikfasern, in einem als Matrix dienendes Keramikmaterial eingebettet. Der oxidkeramische Verbundwerkstoff kann über eine Wickeltechnik hergestellt werden. Fasern aus Aluminiumoxid sind in eine poröse Matrix aus Aluminiumoxid eingebettet. Alternativ könnte die zweite Bauteilkomponente 5 auch lediglich aus Fasern, beispielsweise Keramikfasern oder Glasfasern, bestehen, z.B. in Form einer geflochtenen Röhre. Das Material wird derart gewählt, dass die zweite Bauteilkomponente 5 durch die anderen Komponenten elastisch verformt werden kann und Druckspannungen keine Schädigungen hervorrufen. Zudem soll das Material gasdicht sein.

Die dritte Bauteilkomponente 7 ist ein Pulverrohling 23 in Form eines Grünteils oder Braunteils. Im dargestellten Beispiel wird dieses Grünteil bzw. Braunteil durch Metallpulverspritzgießen, das heißt mit einem MIM-Verfahren, gefertigt. Hierzu wird zunächst ein Pulver aus metallischen Partikeln mit Binder gemischt. Das Gemisch wird dann in eine gewünschte Form spritzgegossen. Nachfolgend kann der Binder entfernt werden und auf diese Weise das Braunteil erzeugt werden.

Aus den drei Bauteilkomponenten 3, 5, 7 wird dann eine Gesamtbauteilanordnung 25 gebildet. Hierzu wird die erste Bauteilkomponente 3 in das Innenvolumen 11 in der hülsenartigen zweiten Bauteilkomponente 5 eingeschoben, wobei zwischen beiden Bauteilkomponenten 3, 5 zumindest ein geringfügiges Spiel besteht, sodass die beiden Bauteilkomponenten 3, 5 ohne erhebliche Krafteinwirkung zusammengeschoben werden können. Außerdem wird die zweite Bauteilkomponente 5 in die Ausnehmung 9 in der dritten Bauteilkomponente 7 eingeschoben, wobei wiederum zwischen beiden Bauteilkomponenten 5, 7 ein seitliches Spiel besteht.

Der Außendurchmesser der ersten Bauteilkomponente 3 aus einer Nickelbasislegierung beträgt beispielsweise 7,8mm. Der Innendurchmesser der zweiten Bauteilkomponente 5 aus Aluminiumoxidfaser-verstärktem Aluminiumoxid beträgt 8mm bei einem Außendurchmesser von 10mm. Das Aluminiumoxidfaser-verstärkte Aluminiumoxid hat eine thermische Ausdehnung im Bereich von 8 ppm/K und eine Bruchdehnung >0,4 %. Der Modul ist <100 GPa. Der Innendurchmesser der dritten Bauteilkomponente 7 aus einem Grünteil bzw. Braunteil aus Edelstahl oder Nickelbasislegierung ist vor der Wärmebehandlung 11mm. Der Wärmeausdehnungskoeffizient der ersten Bauteilkomponente 3 und dritten Bauteilkomponente 7 ist im Bereich von 14 ppm/K.

Anschließend kann die Gesamtbauteilanordnung 25 bei beispielsweise 1200 °C gesintert werden. Dabei schrumpft die dritte Bauteilkomponente 7 und insbesondere deren Ausnehmung 7 aufgrund der granularen Struktur 15 in ihrem metallischen Werkstoff signifikant, d.h. beispielsweise um 10-20 %. Insbesondere durch diese Schrumpfung und die thermische Ausdehnungen von Bauteilkomponenten 3, 5, 7 stellt sich die Presspassung zwischen den Bauteilkomponenten 3, 5, 7 ein.

Unter anderem durch eine geeignete Auswahl der Werkstoffe für die drei Bauteilkomponenten 3, 5,7 hinsichtlich deren thermischen Ausdehnungskoeffizienten kann hierbei der Sinterprozess und die sich letztendlich einstellenden Presspassung besonders vorteilhaft beeinflusst werden. Der Ausdehnungskoeffizient α₂ der zweiten Bauteilkomponente 5 sollte deutlich kleiner sein als der Ausdehnungskoeffizient α₁ der innenliegenden ersten Bauteilkomponente 3 und dieser wiederum kleiner sein als der Ausdehnungskoeffizient α₃ der außenliegenden dritten Bauteilkomponente 7, d.h. α₂ < α₁ < α₃. Der geringe Ausdehnungskoeffizient und die limitierte Bruchdehnung der zweiten Bauteilkomponente 5 erfordern eine genaue Abstimmung aller Bauteilgeometrien, um ein zu starkes Dehnen oder Stauchen von der zweiten Bauteilkomponente 5 zu vermeiden. Zudem muss die zweite Bauteilkomponente 5 von der ersten Bauteilkomponente 3 und dritten Bauteilkomponente 7 verformt werden können. Daher sollte für die zweite Bauteilkomponente 5 ein Material mit geringem Modul und geringe Wandstärken gewählt werden.

Dadurch kann, wie in Fig. 2 schematisch veranschaulicht, während des Sintervorgangs beim anfänglichen Aufwärmen ausgehend von einer Anfangstemperatur T0 bis auf eine erhöhte erste Temperatur T1 > T0 sich die erste Bauteilkomponente 3 erheblich stärker ausdehnen als die umgebende hülsenartige zweite Bauteilkomponente 5, bis sie an dieser zunächst anliegt und diese anschließend zumindest geringfügig elastisch aufdehnt. Hierdurch stützt die erste Bauteilkomponente 3 die zweite Bauteilkomponente 5 und der Spalt ist geschlossen.

Wird die Temperatur anschließend weiter auf eine zweite Temperatur T2 > T1 erhöht, die der Sintertemperatur entspricht, bei der das Grünteil 21 beginnt, seine mikroskopische Struktur aufgrund von Diffusionsprozessen und/oder lokalen Aufschmelzprozessen zu verändern, setzt ein Schrumpfen der von dem Pulverrohling 23 gebildeten dritten Bauteilkomponente 7 ein.

Die dritte Bauteilkomponente 7 verändert hierbei ihr Volumen in einem Maße, das deutlich über die Änderungen hinausgeht, die lediglich auf thermisch bedingte Volumenänderungen aufgrund des thermischen Ausdehnungskoeffizienten des dritten Werkstoffs zurückzuführen wären. Anders ausgedrückt verändert die dritte Bauteilkomponente 3 während des Sinterns durch das Schrumpfen ihrer ursprünglich stark porösen Struktur ihr Volumen derart, dass es auch nach einem anschließenden Abkühlen auf die Anfangstemperatur T0 verbleibt.

Dementsprechend weist die Ausnehmung 9 in der dritten Bauteilkomponente 7 in einem Temperaturbereich, der von der Umgebungstemperatur T0 bis zur maximalen Betriebstemperatur T3, die geringer als die Sintertemperatur T2 ist (T3 < T2) ist, reicht, nach dem Sintern einen deutlich geringeren Innendurchmesser auf als vor dem Sintern und presst hierdurch die hülsenartige zweite Bauteilkomponente 5 auf die darin aufgenommene erste Bauteilkomponente 3.

Während der Temperaturbehandlung wird somit die zweite Bauteilkomponente 5 zunächst beim Aufheizen radial nach außen gedehnt und anschließend beim Abkühlen radial nach innen zusammengepresst. Da sie jedoch aufgrund der in ihr vorhandenen Fasern eine signifikante Bruchdehnung aufweist und durch die initiale Dehnung, welche durch die Ausdehnung der ersten Bauteilkomponente 3 und den initialen Spaltabstand zwischen erster Bauteilkomponente 3 und zweiter Bauteilkomponente 5 begrenzt ist und anschließende Stauchung, welche durch die Stützwirkung der ersten Bauteilkomponente 3 limitiert ist, die maximalen Dehnungen reduziert werden können, kommt es bei diesen Verformungen zu keinen wesentlichen Rissen oder Brüchen in der zweiten Bauteilkomponente 5. Bei Raumtemperatur liegen an der dritten Bauteilkomponente 7 Zugtangentialspannungen an. Da die zweite Bauteilkomponente 5 dementsprechend unversehrt bleibt, kann sie im fertigen Hybridbauteil 1 als effiziente elektrische Isolierung zwischen der ersten und der dritten Bauteilkomponente 3, 7 dienen.

Bei dem beschriebenen Herstellungsverfahren wird insbesondere der physikalische Effekt genutzt, dass die durch Metallpulverspritzgießen gefertigte erste Bauteilkomponente 3 beim anschließenden Sintern mehr schrumpft, als sie sich in einer späteren Anwendung beispielsweise aufgrund von sich ändernden Temperaturen ausdehnt. Dadurch sind unter anderem neue Möglichkeiten im Bereich eines Kraftschlusses, eines Formschlusses und/oder von Hinterschnitten möglich.

Abschließend werden mögliche Ausgestaltungen und dabei erreichbare Vorteile einer möglicherweise bevorzugten Ausführungsform nochmals mit teilweise geringfügig geänderter Wortwahl dargestellt.

Bei einer Ausführungsform der erfindungsgemäßen Herstellung des Verbundbauteils werden oxidkeramische Faserverbundkeramiken (Aluminiumfaserkeramik) als Zwischenschicht und Metal Injection Moulding Teile für die Ummantelung eingesetzt. Die keramische Zwischenschicht erfüllt eine elektrische Isolationsfunktion zwischen dem inneren und äußeren Metallteil. Durch den Sinterschrumpf > 10 % des Nennmaßes im Verlauf der Prozessierung wird das äußere MIM-Bauteil auf die Faserkeramik durch Sintern umflossen und durch weiteres Abkühlen aufgeschrumpft, und zwar stärker als durch einen reinen thermischen Fügevorgang. Die Faserkeramik mit hoher Bruchdehnung nimmt die Druckspannungen auf und der Fügesitz zum inneren Metallbauteil wird noch inniger und dichter.

Die Anwendung ist unter anderem in Elektroden zur Stromdurchführung mit guter Abtrennung der Reaktionsräume zu sehen. Durch Auswahl geeigneter metallischer Werkstoffe sind Anwendungsbereiche über 1000 °C realisierbar und Thermoschockanforderungen werden grundsätzlich erfüllt.

Bisher wurden ähnliche Elektroden meist unter Anwendung folgender Technologien gefertigt:
a) Nutzen von thermischem Fügen von keramisch beschichteter Metallseele und äußerer metallischer Hülse;
b) Stampfen von keramischen Massen in die Zwischenzone zwischen äußerer metallischen Ummantelung und innerer Metallischer Seele;
c) Polymere als elektrisch isolierende Zwischenschichten.

Allerdings wurden dabei unter anderem folgende Nachteile beobachtet:
- Schwierige Umgebungsbedingungen (Atmosphäre, Luftfeuchte) und hohe Temperaturen führen zu Alterungseffekten, Setzen von Massen;
- Monolithische Keramiken versagen bei Thermoschock oder wegen der thermischen Ausdehnung der Metalle bzw. durch die geringe Bruchdehnung oder mechanische Belastung durch Vibrationen;
- Geringe Schichtdicke der keramischen Schicht erfüllt nicht die Anforderungen hinsichtlich elektrischer Isolation;
- Rein thermisches Fügen erfordert große Temperatur- und oder WAK-Differenz zwischen Metallen und gute Maßhaltigkeit der Fügeteile;
- Geometrische Einschränkungen z.B. bei der innenliegenden metallischen Seele oder Ummantelung;

Mithilfe von Ausführungsformen der hierin dargestellten Lösung werden unter anderem die nachfolgenden Vorteile angestrebt:
- Elektrodendurchführung für hohe Temperaturen und unter Thermoschockbedingungen mit der dichten Abtrennung von Reaktionsräumen z.B. für die elektrische Katalysator-Vorheizung benötigen solche Kontaktierungselemente;
- Elektrisch isolierende Welle/Nabe-Verbindungen für extremste Anwendungsbedingungen ohne Setzeffekte;
- Ersatz von elektrisch isolierenden Isolationskomponenten aus Metall und monolithischer Keramik, welche durch Schweißen gefügt werden können.

Ausführungsformen können dabei insbesondere ausgestaltet sein als Sinterschrumpfverfahren zur Herstellung eines mehrteiligen Multimaterial-Verbundkörpers/Werkstoffverbunds der vorteilhaft mit Komponenten wie folgt aufgebaut ist:
i) innenliegende metallische Seele mit Ausdehnungskoeffizient α₁
ii) keramische Hülse Zwischenschicht mit Ausdehnungskoeffizient α₂
iii) außenliegende sintermetallische Ummantelung mit Ausdehnungskoeffizient α₃
mit α₂ < α₁ < α₃

Die Wärmebehandlung nach dem Zusammenbau aller Komponenten des Verbundkörpers schließt das Sintern des Sintermetalls ein und setzt sich aus drei Temperaturstufen T0 < T1 < T3 < T2 zusammen:
i) Ausdehnung der metallischen Seele bis zum Anliegen an die keramische Zwischenschicht und elastisches Dehnen der keramischen Zwischenschicht durch die innenliegende Metallseele beim Erwärmen von T0 aus T1 auf Grund der höheren Wärmedehnung der metallischen Seele αS gegenüber der keramischen Hülse α2;
ii) initiales Schwinden des außenliegenden metallischen Sinterköpers durch Sintern bis zum Anliegen an die gedehnte keramische Hülse bei weiterem Erwärmen von T1 auf T2;
iii) Verfestigung und thermische Kontraktion der äußeren Sintermetallummantelung durch Abkühlen von T3 auf T0 und einhergehendes Anpressen der keramischen Hülse an die innenliegende metallische Seele, deren Ausdehnungskoeffizient αS geringer ist als die der sintermetallischen Ummantelung.

Das Sintermetall kann zumindest ein Element aus der Gruppe Ni, Cr, Fe, ... enthalten und einen Wärmeausdehnungskoeffizienten im Bereich von kleiner 25 ppm/K und ein Modul kleiner <220 GPa aufweisen.

Die keramische Hülse kann aus ein oxidkeramischer Verbundwerkstoff sein, der z.B. zumindest ein Element aus der Gruppe Al, Zr, Y, Si, ... enthält. Der oxidkeramische Verbundwerkstoff kann durch eine Bruchdehnung von größer 0,1 %, bevorzugt größer 0,2 %, aufweisen und einen Wärmeausdehnungskoeffizienten im Bereich von kleiner 12 ppm/K und ein Modul kleiner <100 GPa haben und elektrisch isolierend sein.

Die Wärmebehandlungsschritt T2 kann bei Temperaturen über 1200 °C in nichtoxidierender Atmosphäre stattfinden und T3 < 1100 °C die maximale Anwendungstemperatur darstellen. Alle Komponenten haben jeweils die gleich Temperatur.

Die innenliegende metallische Seele kann eine hohe temperaturunabhängige elektrische Leitfähigkeit bis 1000 °C haben.

Der Verbundköper kann eine Elektrode oder eine elektrisch isolierende Welle/ Nabeverbindung sein.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Hybridbauteil
- 3: erste Bauteilkomponente
- 5: zweite Bauteilkomponente
- 7: dritte Bauteilkomponente
- 9: Ausnehmung
- 11: Innenvolumen
- 13: Rotationsachse
- 15: granulare Struktur
- 17: Metallpulverpartikel
- 19: Hohlräume
- 23: Pulverrohling
- 25: Gesamtbauteilanordnung

## Patentansprüche

1. Verfahren zum Herstellen eines Hybridbauteils (1), aufweisend:
- Bereitstellen einer ersten Bauteilkomponente (3) aus einem metallischen ersten Werkstoff,
- Bereitstellen einer zweiten Bauteilkomponente (5) aus einem elektrisch isolierenden zweiten Werkstoff, wobei die zweite Bauteilkomponente (5) als Hülse ausgebildet ist,
- Bereitstellen einer dritten Bauteilkomponente (7) aus einem metallischen dritten Werkstoff, wobei die dritte Bauteilkomponente (7) eine Ausnehmung (9) aufweist, welche eine zu einer Außenkontur der zweiten Bauteilkomponente (5) komplementäre Innenkontur aufweist,
- Bilden einer Gesamtbauteilanordnung (25) durch Anordnen der ersten Bauteilkomponente (3) in dem Innenvolumen (11) der zweiten Bauteilkomponenten (5) und Anordnen der zweiten Bauteilkomponente (5) in der Ausnehmung (9) der dritten Bauteilkomponente (7),
- Sintern der Gesamtbauteilanordnung (25) durch Erhitzen auf eine Sintertemperatur, wobei die erste Bauteilkomponente (3) und/oder die dritte Bauteilkomponente (7) als Pulverrohling (23) mit aneinander angrenzend angeordneten Metallpulverpartikeln (17) derart ausgebildet ist, dass bei Erreichen der Sintertemperatur (T2) die Metallpulverpartikel (17) zusammensintern und dabei die jeweilige Bauteilkomponente (3, 7) eine auch nach Abkühlen unter die Sintertemperatur (T2) verbleibende Volumenänderung derart erfährt, dass die Außenkontur der ersten Bauteilkomponente (3) und die Innenkontur der Ausnehmung (9) der dritten Bauteilkomponente (7) aufeinander zu verlagert werden,
**dadurch gekennzeichnet, dass** die zweite Bauteilkomponente (5) mit anorganischen, nicht-metallischen Fasern ausgebildet ist und dass die zweite Komponente ein Innenvolumen (11) umgibt, welches eine zu einer Außenkontur der ersten Bauteilkomponente (3) komplementäre Innenkontur aufweist.

2. Verfahren nach Anspruch 1,
wobei Innenabmessungen der Ausnehmung (9) der dritten Bauteilkomponente (7) vor dem Sintern größer sind als entlang gleicher Achsen gemessene Außenabmessungen der in der Ausnehmung (9) angeordneten zweiten Bauteilkomponente (5) und/oder wobei Innenabmessungen in dem Innenvolumen (11) der zweiten Bauteilkomponente (5) vor dem Sintern größer sind als entlang gleicher Achsen gemessene Außenabmessungen der in dem Innenvolumen (11) der zweiten Bauteilkomponente (5) angeordneten ersten Bauteilkomponente (3),
wobei der Pulverrohling (23), welches die dritte Bauteilkomponente (7) bildet, während des Sinterns die auch nach Abkühlen unter die Sintertemperatur (T2) verbleibende Volumenänderung als Schrumpfung erfährt und/oder wobei der Pulverrohling (23), welches die erste Bauteilkomponente (3) bildet, während des Sinterns die auch nach Abkühlen unter die Sintertemperatur (T2) verbleibende Volumenänderung als Expansion erfährt,
wobei eine Geometrie des Pulverrohlings (23) der dritten und/oder der ersten Bauteilkomponente (7, 3), Eigenschaften der Metallpulverpartikel (17) des jeweiligen Pulverrohlings (23) und Prozessparameter beim Sintern derart gewählt sind, dass der Pulverrohling (23) der dritten Bauteilkomponente (7) beim Sintern in einem Maße schrumpft und/oder dass der Pulverrohling (23) der ersten Bauteilkomponente (3) beim Sintern in einem Maße expandiert, dass sich zwischen der ersten, der zweiten und der dritten Bauteilkomponente (3, 5, 7) eine Presspassung einstellt.

3. Verfahren nach einem der vorangehenden Ansprüche,
wobei der Pulverrohling (23) mittels Metallpulverspritzgießen gefertigt ist.

4. Verfahren nach einem der Ansprüche 1 bis 2,
wobei der Pulverrohling (23) durch Pressen von Metallpulver in eine vordefinierte Form gefertigt ist.

5. Verfahren nach einem der Ansprüche 1 bis 2,
wobei der Pulverrohling (23) durch additive Fertigung durch sukzessives Aufbringen mehrerer Lagen einer Metallpulver-haltigen Masse gefertigt ist.

6. Verfahren nach einem der vorangehenden Ansprüche,
wobei ein Gesamtvolumen aller Metallpulverpartikel (17) in dem Pulverrohling (23) vor dem Sintern kleiner ist als 90% des Volumens des Pulverrohlings.

7. Verfahren nach einem der vorangehenden Ansprüche,
wobei die Sintertemperatur (T2) höher ist als eine maximale Betriebstemperatur (T3), bis zu der das Hybridbauteil (1) bestimmungsgemäß betreibbar ist.

8. Verfahren nach einem der vorangehenden Ansprüche,
wobei der zweite Werkstoff eine Bruchdehnung von wenigstens 0,1% aufweist.

9. Verfahren nach einem der vorangehenden Ansprüche,
wobei die zweite Bauteilkomponente (5) mit keramischen Fasern, Basaltfasern und/oder Glasfasern ausgebildet ist.

10. Verfahren nach einem der vorangehenden Ansprüche,
wobei die zweite Bauteilkomponente (5) mit einem oxidkeramischen Verbundwerkstoff ausgebildet ist.

11. Verfahren nach einem der vorangehenden Ansprüche,
wobei der erste Werkstoff einen Ausdehnungskoeffizient α₁ aufweist, der zweite Werkstoff einen Ausdehnungskoeffizient α₂ aufweist und der dritte Werkstoff einen Ausdehnungskoeffizient α₃ aufweist,
wobei α₂ < α₁ < α₃ .

12. Verfahren nach Anspruch 11,
wobei α₂ < 12 ppm/K ist und/oder wobei α₃ < 25 ppm/K.

13. Hybridbauteil (1) aufweisend:
- eine erste Bauteilkomponente (3) aus einem metallischen ersten Werkstoff,
- eine zweite Bauteilkomponente (5) aus einem elektrisch isolierenden zweiten Werkstoff, wobei die zweite Bauteilkomponente (5) als Hülse ausgebildet ist,
- eine dritte Bauteilkomponente (7) aus einem metallischen dritten Werkstoff, wobei die dritte Bauteilkomponente (7) eine Ausnehmung (9) aufweist, welche die zweite Bauteilkomponente (5) presspassend umschließt,
wobei die erste Bauteilkomponente (3) und/oder die dritte Bauteilkomponente (7) als Sinterbauteil ausgebildet ist, welches durch Sintern eines Pulverrohlings (23) mit aneinander angrenzend angeordneten Metallpulverpartikeln (17) ausgebildet ist, **dadurch gekennzeichnet, dass** die zweite Bauteilkomponente (5) mit anorganischen, nicht-metallischen Fasern ausgebildet ist und dass die zweite Komponente die erste Komponente presspassend umschließt.

14. Hybridbauteil (1) nach Anspruch 13,
wobei das Sinterbauteil ein aus stoffschlüssig miteinander verbundenen Metallpulverpartikeln (17) gebildetes Diffusionsgefüge aufweist.

15. Hybridbauteil (1) nach einem der Ansprüche 13 und 14,
wobei an einer Grenzfläche, an der die erste Bauteilkomponente (3) mit einer außenliegenden Oberfläche an eine gegenüberliegende innenliegende Oberfläche der zweiten Bauteilkomponente (5) angrenzt, und/oder an einer Grenzfläche, an der die zweite Bauteilkomponente (5) mit einer außenliegenden Oberfläche an eine gegenüberliegende innenliegende Oberfläche in der Ausnehmung (9) der dritten Bauteilkomponente (7) angrenzt, eine an der jeweiligen außenliegenden Oberfläche ausgebildete Oberflächenstruktur in eine zu dieser komplementär ausgebildete Oberflächenstruktur an der jeweils gegenüberliegenden innenliegenden Oberfläche eingreift.

## Claims

1. A method for producing a hybrid component (1), comprising:
- providing a first component constituent (3) made of a metallic first material,
- providing a second component constituent (5) made of an electrically insulating second material, wherein the second component constituent (5) is in the form of a sleeve
- providing a third component constituent (7) made of a metallic third material, wherein the third component constituent (7) has a recess (9) which has an inner contour complementary to an outer contour of the second component constituent (5),
- forming a complete component assembly (25) by arranging the first component constituent (3) in the inner volume (11) of the second component constituent (5) and arranging the second component constituent (5) in the recess (9) of the third component constituent (7),
- sintering the complete component assembly (25) by heating to a sintering temperature, wherein the first component constituent (3) and/or the third component constituent (7) is/are in the form of a powder blank (23) having metal powder particles (17) arranged adjoining one another, such that, when the sintering temperature (T2) is reached, the metal powder particles (17) are sintered together and the component constituent (3, 7) in question thereby experiences a volume change that remains even after cooling to below the sintering temperature (T2) in such a manner that the outer contour of the first component constituent (3) and the inner contour of the recess (9) of the third component constituent (7) are displaced towards one another,
**Characterized in that** the second component constituent (5) is formed with inorganic, non-metallic fibers and the second component constituent (5) surrounds an inner volume (11) which has an inner contour complementary to an outer contour of the first component constituent (3),

2. The method as claimed in claim 1,
wherein inside dimensions of the recess (9) of the third component constituent (7) are larger prior to sintering than outside dimensions, measured along the same axes, of the second component constituent (5) arranged in the recess (9), and/or wherein inside dimensions in the inner volume (11) of the second component constituent (5) are larger prior to sintering than outside dimensions, measured along the same axes, of the first component constituent (3) arranged in the inner volume (11) of the second component constituent (5),
wherein the powder blank (23) which forms the third component constituent (7), during sintering, experiences the volume change that remains even after cooling to below the sintering temperature (T2) as shrinkage, and/or wherein the powder blank (23) which forms the first component constituent (3), during sintering, experiences the volume change that remains even after cooling to below the sintering temperature (T2) as expansion,
wherein a geometry of the powder blank (23) of the third and/or first component constituent (7, 3), properties of the metal powder particles (17) of the respective powder blank (23) and process parameters during sintering are chosen such that the powder blank (23) of the third component constituent (7) shrinks to such an extent on sintering and/or the powder blank (23) of the first component constituent (3) expands to such an extent on sintering that a press-fit occurs between the first, the second and the third component constituents (3, 5, 7).

3. The method as claimed in any one of the preceding claims,
wherein the powder blank (23) is manufactured by means of metal injection molding.

4. The method as claimed in either claim 1 or claim 2,
wherein the powder blank (23) is manufactured by pressing metal powder into a predefined shape.

5. The method as claimed in either claim 1 or claim 2,
wherein the powder blank (23) is manufactured by additive manufacture by successive application of multiple layers of a compound containing metal powder.

6. The method as claimed in any one of the preceding claims,
wherein a total volume of all the metal powder particles (17) in the powder blank (23) prior to the sintering is less than 90% of the volume of the powder blank.

7. The method as claimed in any one of the preceding claims,
wherein the sintering temperature (T2) is higher than a maximum operating temperature (T3) up to which the hybrid component (1) is able to be operated when used as intended.

8. The method as claimed in any one of the preceding claims,
wherein the second material has an elongation at break of at least 0.1%.

9. The method as claimed in any one of the preceding claims,
wherein the second component constituent (5) is formed with ceramic fibers, basalt fibers and/or glass fibers.

10. The method as claimed in any one of the preceding claims,
wherein the second component constituent (5) is formed with an oxide ceramic composite.

11. The method as claimed in any one of the preceding claims,
wherein the first material has a coefficient of thermal expansion α₁, the second material has a coefficient of thermal expansion α₂ and the third material has a coefficient of thermal expansion α₃,
wherein α₂ < α₁ < α₃.

12. The method as claimed in claim 11,
wherein α₂ < 12 ppm/K and/or wherein α₃ < 25 ppm/K.

13. A hybrid component (1), having:
- a first component constituent (3) made of a metallic first material,
- a second component constituent (5) made of an electrically insulating second material, wherein the second component constituent (5) is in the form of a sleeve,
- a third component constituent (7) made of a metallic third material, wherein the third component constituent (7) has a recess (9) which encloses the second component constituent (5) with a press-fit,
wherein the first component constituent (3) and/or the third component constituent (7) is/are in the form of a sintered component which is formed by sintering a powder blank (23) having metal powder particles (17) arranged adjoining one another,
**characterized in that** the second component constituent (5) is formed with inorganic, non-metallic fibers and that the second component encloses the first component constituent (3) with a press-fit.

14. The hybrid component (1) as claimed in claim 13,
wherein the sintered component has a diffusion structure formed of metal powder particles (17) connected to one another by material bonding.

15. The hybrid component (1) as claimed in one of claims 13 and 14,
wherein, at an interface at which an external surface of the first component constituent (3) adjoins an opposite internal surface of the second component constituent (5), and/or at an interface at which an external surface of the second component constituent (5) adjoins an opposite internal surface in the recess (9) of the third component constituent (7), a surface structure formed on the respective external surface engages into a complementary surface structure on the respective opposite internal surface.

## Revendications

1. Procédé de fabrication d'un composant hybride (1), comportant de :
- fournir un premier constituant de composant (3) en un premier matériau métallique,
- fournir un deuxième constituant de composant (5) en un deuxième matériau électriquement isolant, dans lequel le deuxième constituant de composant (5) est conçu sous la forme d'une douille,
- fournir un troisième constituant de composant (7) en un troisième matériau métallique, dans lequel le troisième constituant de composant (7) comporte un évidement (9) ayant un contour intérieur complémentaire d'un contour extérieur du deuxième constituant de composant (5),
- former un agencement de composants complet (25) en disposant le premier constituant de composant (3) dans le volume intérieur (11) du deuxième constituant de composant (5) et en disposant le deuxième constituant de composant (5) dans l'évidement (9) du troisième constituant de composant (7),
- fritter l'agencement de composants complet (25) par chauffage à une température de frittage,
dans lequel le premier constituant de composant (3) et/ou le troisième constituant de composant (7) sont conçus sous la forme d'une ébauche de poudre (23) avec des particules de poudre métallique (17) disposées de manière adjacente les unes aux autres, de telle sorte que lorsque la température de frittage (T2) est atteinte, les particules de poudre métallique (17) frittées ensemble et les constituants de composant (3, 7) respectifs sont ainsi soumis à une variation de volume qui subsiste même après un refroidissement en dessous de la température de frittage (T2), de telle sorte que le contour extérieur du premier constituant de composant (3) et le contour intérieur de l'évidement (9) du troisième constituant de composant (7) s'approchent l'un vers l'autre, **caractérisé en ce que** le deuxième constituant de composant (5) est réalisé avec des fibres non métalliques inorganiques et le deuxième constituant de composant (5) entoure un volume intérieur (11) ayant un contour intérieur complémentaire d'un contour extérieur du premier constituant de composant (3).

2. Procédé selon la revendication 1,
dans lequel des dimensions intérieures de l'évidement (9) du troisième constituant de composant (7) avant le frittage sont supérieures à des dimensions extérieures du deuxième constituant de composant (5) disposé dans l'évidement (9), mesurées le long des mêmes axes et/ou dans lequel des dimensions intérieures dans le volume intérieur (11) du deuxième constituant de composant (5) avant le frittage sont supérieures à des dimensions extérieures du premier constituant de composant (3) disposé dans le volume intérieur (11) du deuxième constituant de composant (5), mesurées le long des mêmes axes,
dans lequel l'ébauche de poudre (23) formant le troisième constituant de composant (7) est soumise, pendant le frittage, à la variation de volume qui subsiste même après un refroidissement en dessous de la température de frittage (T2) sous la forme d'une contraction et/ou dans lequel l'ébauche de poudre (23) formant le premier constituant de composant (3) est soumise, pendant le frittage, à la variation de volume qui subsiste même après un refroidissement en dessous de la température de frittage (T2) sous la forme d'une dilatation,
dans lequel une géométrie de l'ébauche de poudre (23) du troisième et/ou du premier constituant de composant (7, 3), des propriétés des particules de poudre métallique (17) de l'ébauche de poudre (23) respective et des paramètres de processus lors du frittage sont choisis de telle sorte que l'ébauche de poudre (23) du troisième constituant de composant (7) se contracte pendant le frittage dans une mesure et/ou l'ébauche de poudre (23) du premier constituant de composant (3) se dilate pendant le frittage dans une mesure telle qu'un ajustement serré se produit entre les premier, deuxième et troisième constituants de composant (3, 5, 7).

3. Procédé selon l'une des revendications précédentes,
dans lequel l'ébauche de poudre (23) est fabriquée au moyen d'un moulage par injection de poudre métallique.

4. Procédé selon l'une des revendications 1 à 2,
dans lequel l'ébauche de poudre (23) est fabriquée en pressant de la poudre métallique pour obtenir une forme prédéfinie.

5. Procédé selon l'une des revendications 1 à 2,
dans lequel l'ébauche de poudre (23) est fabriquée par fabrication additive en appliquant successivement plusieurs couches d'une masse contenant de la poudre métallique.

6. Procédé selon l'une des revendications précédentes,
dans lequel un volume total de toutes les particules de poudre métallique (17) dans l'ébauche de poudre (23) avant le frittage est inférieur à 90 % du volume de l'ébauche de poudre.

7. Procédé selon l'une des revendications précédentes,
dans lequel la température de frittage (T2) est supérieure à une température de fonctionnement maximale (T3) jusqu'à laquelle le composant hybride (1) peut fonctionner conformément à l'usage prévu.

8. Procédé selon l'une des revendications précédentes,
dans lequel le deuxième matériau a un allongement à la rupture d'au moins 0,1 %.

9. Procédé selon l'une des revendications précédentes,
dans lequel le deuxième constituant de composant (5) est réalisé avec des fibres céramiques, des fibres de basalte et/ou des fibres de verre.

10. Procédé selon l'une des revendications précédentes,
dans lequel le deuxième constituant de composant (5) est réalisé avec un matériau composite oxyde-céramique.

11. Procédé selon l'une des revendications précédentes,
dans lequel le premier matériau a un coefficient de dilatation α₁, le deuxième matériau a un coefficient de dilatation α₂ et le troisième matériau a un coefficient de dilatation α₃, où α₂ < α₁ < α₃ .

12. Procédé selon la revendication 11,
où α₂ < 12 ppm/K et/ou où α₃ < 25 ppm/K.

13. Composant hybride (1) comportant :
- un premier constituant de composant (3) en un premier matériau métallique,
- un deuxième constituant de composant (5) en un deuxième matériau électriquement isolant, dans lequel le deuxième constituant de composant (5) est réalisé sous la forme d'une douille
- un troisième constituant de composant (7) en un troisième matériau métallique, dans lequel le troisième constituant de composant (7) comporte un évidement (9) qui entoure le deuxième constituant de composant (5) avec un ajustement serré,
dans lequel le premier constituant de composant (3) et/ou le troisième constituant de composant (7) est réalisé sous la forme d'un composant fritté, qui est réalisé par frittage d'une ébauche de poudre (23) avec des particules de poudre métallique (17) disposées de manière adjacente les unes aux autres,
**caractérisé en ce que** le deuxième constituant de composant (5) est réalisé avec des fibres non métalliques inorganiques et le deuxième constituant entoure le premier constituant de composant (3) avec un ajustement serré.

14. Composant hybride (1) selon la revendication 13,
dans lequel le composant fritté comporte une structure de diffusion formée de particules de poudre métallique (17) assemblées les unes aux autres par liaison de matière.

15. Composant hybride (1) selon l'une des revendications 13 et 14,
dans lequel au niveau d'une interface sur laquelle une surface extérieure du premier constituant de composant (3) jouxte une surface intérieure opposée du deuxième constituant de composant (5), et/ou au niveau d'une interface sur laquelle une surface extérieure du deuxième constituant de composant (5) jouxte une surface intérieure opposée dans l'évidement (9) du troisième constituant de composant (7), une structure de surface formée sur la surface extérieure respective s'engage dans une structure de surface formée de manière complémentaire à celle-ci sur la surface intérieure opposée respective.
